# EUROPEAN PATENT APPLICATION

(11) **EP 4 297 480 A1**
(43) Date of publication of application: **27.12.2023**
(21) Application number: 21927708.4
(22) Date of filing: 24.12.2021
(51) Int. Cl.: H04W 36/00

(54) **WI-FI HOTSPOT SWITCHING METHOD, TERMINAL DEVICE, AND STORAGE MEDIUM**

(30) Priority: 26.02.2021 CN 202110217640
(71) Applicant: Huawei Technologies Co., Ltd., Shenzhen, Guangdong 518129 (CN)
(72) Inventor: QIAN, Feng, Shenzhen, Guangdong 518129 (CN); WANG, Bao, Shenzhen, Guangdong 518129 (CN); WANG, Jie, Shenzhen, Guangdong 518129 (CN); LI, Zhenzhou, Shenzhen, Guangdong 518129 (CN)
(74) Representative: Huawei European IPR
(86) International application number: PCT/CN2021/141322
(87) International publication number: WO 2022/179284

(57) **Abstract**

Embodiments of this application are applicable to the field of communication technologies, and provide a Wi-Fi hotspot switching method, a terminal device, and a storage medium, and are applied to a system including a first terminal device and at least one second terminal device. The first terminal device enables a first Wi-Fi hotspot, and each second terminal device is connected to the first Wi-Fi hotspot. The first terminal device obtains mobile channel quality information and sharing capability information of each terminal device. When determining, based on the foregoing information, that the Wi-Fi hotspot needs to jump, the first terminal device sends first jump information to a target terminal device in the second terminal device, to indicate the target terminal device to enable a second Wi-Fi hotspot. After the first terminal device disables the first Wi-Fi hotspot and the target terminal device enables the second Wi-Fi hotspot, a device other than the target terminal device in the system may connect to the second Wi-Fi hotspot. Communication quality of the entire system is improved through automatic hotspot switching.

## Description

This application claims priority to Chinese Patent Application No. 202110217640.8, filed with the China National Intellectual Property Administration on February 26, 2021 and entitled "WI-FI HOTSPOT SWITCHING METHOD, TERMINAL DEVICE, AND STORAGE MEDIUM", which is incorporated herein by reference in its entirety.

### TECHNICAL FIELD

Embodiments of this application relate to the field of communication technologies, and in particular, to a Wi-Fi hotspot switching method, a terminal device, and a storage medium.

### BACKGROUND

A wireless fidelity (wireless fidelity, Wi-Fi) technology is a widely used wireless network transmission technology. In a scenario without Wi-Fi, a plurality of terminals usually use Wi-Fi hotspots of the plurality of terminals to establish a small wireless local area network (wireless local area network, WLAN). One of the plurality of terminals is a hotspot provider, and other terminals of the plurality of terminals are hotspot accessors. The other terminals may share traffic of the hotspot provider, to implement a wireless communication service.

Currently, the hotspot provider and the hotspot accessors are fixed, and communication quality of the hotspot accessors completely depends on the fixed hotspot provider. Therefore, it is difficult to improve communication quality of the entire wireless local area network.

### SUMMARY

Embodiments of this application provide a Wi-Fi hotspot switching method, a terminal device, and a storage medium, to improve communication quality of a wireless local area network.

According to a first aspect, a Wi-Fi hotspot switching method is provided, applied to a communication system. The communication system includes a first terminal device and at least one second terminal device, the first terminal device enables a first Wi-Fi hotspot, and the second terminal device is connected to the first Wi-Fi hotspot. The method includes: The first terminal device obtains mobile channel quality information and sharing capability information of the first terminal device through detection; and the second terminal device obtains mobile channel quality information and sharing capability information of the second terminal device through detection, and sends the mobile channel quality information and the mobile channel quality information of the second terminal device to the first terminal device. If the first terminal device determines, based on the mobile channel quality information and/or the sharing capability information of the first terminal device and the mobile channel quality information and/or the sharing capability information of each second terminal device, that a Wi-Fi hotspot jumps to a target terminal device in the at least one second terminal device, the first terminal device sends first jump information to the target terminal device, where the first jump information is used to indicate the target terminal device to enable a second Wi-Fi hotspot. The target terminal device stops connecting to the first Wi-Fi hotspot, and enables the second Wi-Fi hotspot. The first terminal device disables the first Wi-Fi hotspot and is connected to the second Wi-Fi hotspot. A non-target terminal device stops connecting to the first Wi-Fi hotspot, and is connected to the second Wi-Fi hotspot. The non-target terminal device is a second terminal device other than the target terminal device in the at least one second terminal device.

According to the Wi-Fi hotspot switching method provided in the first aspect, a hotspot provider may jump. A current hotspot provider is the first terminal device, and the first terminal device determines, based on mobile communication quality and a sharing capability of each terminal device in a wireless local area network, whether the hotspot provider needs to be changed. In a plurality of terminal devices, if there is a more appropriate terminal device that can provide a hotspot than an original hotspot provider, a hotspot is determined to be jumped. The original hotspot provider disables the hotspot, and a new hotspot provider enables a hotspot, to improve networking flexibility of the wireless local area network. By jumping the hotspot, communication quality of a new hotspot is improved, communication quality of a terminal device connected to the new hotspot is improved, and communication quality of the entire wireless local area network is improved.

In a possible implementation, the method further includes: The first terminal device disables display of a first icon, and displays a second icon. The first icon is used to indicate the first terminal device to enable a Wi-Fi hotspot, and the second icon is used to indicate that the first terminal device enables a WLAN function and is connected to the Wi-Fi hotspot.

In this implementation, the first icon and the second icon may be used to intuitively prompt a user of a hotspot jump change of the first terminal device, to improve user experience.

In a possible implementation, the method further includes: The target terminal device disables display of a second icon, and displays a first icon. The first icon is used to indicate the target terminal device to enable a Wi-Fi hotspot, and the second icon is used to indicate that the target terminal device enables a WLAN function and is connected to the Wi-Fi hotspot.

In this implementation, the first icon and the second icon may be used to intuitively prompt a user of a hotspot jump change of the target terminal device, to improve user experience.

In a possible implementation, after the first terminal device sends first jump information to the target terminal device, the method further includes: The first terminal device or the target terminal device sends second jump information to the non-target terminal device, where the second jump information is used to indicate the non-target terminal device to connect to the second Wi-Fi hotspot.

In this implementation, the second jump information is sent, so that the non-target terminal device clearly learns of a hotspot to which a connection needs to be changed, to shorten time for connecting to a new hotspot in a hotspot change process.

According to a second aspect, a Wi-Fi hotspot switching method is provided, applied to a first terminal device. The first terminal device enables a first Wi-Fi hotspot, at least one second terminal device is connected to the first Wi-Fi hotspot, and the method includes: obtaining mobile channel quality information and sharing capability information of the first terminal device through detection, and obtaining mobile channel quality information and sharing capability information of each second terminal device; if it is determined, based on the mobile channel quality information and/or the sharing capability information of the first terminal device and the mobile channel quality information and/or the sharing capability information of each second terminal device, that a Wi-Fi hotspot jumps to a target terminal device in the at least one second terminal device, sending first jump information to the target terminal device, where the first jump information is used to indicate the target terminal device to enable a second Wi-Fi hotspot; disabling the first Wi-Fi hotspot; and connecting to the second Wi-Fi hotspot.

In a possible implementation, the obtaining mobile channel quality information and sharing capability information of the second terminal device includes: broadcasting a probe request to the second terminal device; and receiving the mobile channel quality information and the sharing capability information of the second terminal device that are sent by the second terminal device.

In this implementation, because the first terminal device is currently a hotspot provider, and the first terminal device triggers each second terminal device to feed back the mobile channel quality information and the sharing capability information, a detection frequency of the second terminal device can be effectively controlled.

In a possible implementation, the broadcasting a probe request includes: periodically broadcasting the probe request.

In a possible implementation, the broadcasting a probe request includes: broadcasting the probe request if it is determined that the mobile channel quality information of the first terminal device and/or the sharing capability information of the first terminal device meet/meets a preset condition.

In this implementation, the probe request is broadcast in an event triggering manner, to indicate the second terminal device to feed back information, to avoid invalid detection performed by the second terminal device.

In a possible implementation, before the disabling the first Wi-Fi hotspot, the method further includes: receiving permission information and hotspot information of the second terminal device that are sent by the second terminal device, where the permission information of the second terminal device is used to indicate whether a Wi-Fi hotspot is allowed to jump from the second terminal device to another terminal device and whether a Wi-Fi hotspot is allowed to jump from another terminal device to the second terminal device.

In a possible implementation, the method further includes: broadcasting permission information and hotspot information of each terminal device to the second terminal device.

In this implementation, the first terminal device broadcasts the permission information and the hotspot information of each terminal device in a wireless local area network, so that terminal devices can share respective hotspot-related information, to facilitate processing in a subsequent procedure.

In a possible implementation, the determining, based on the mobile channel quality information and/or the sharing capability information of the first terminal device and the mobile channel quality information and/or the sharing capability information of each second terminal device, that a Wi-Fi hotspot jumps to a target terminal device in the at least one second terminal device includes: determining, based on the permission information of each second terminal device, the mobile channel quality information and/or the sharing capability information of the first terminal device, and the mobile channel quality information and/or the sharing capability information of each second terminal device, that the Wi-Fi hotspot jumps to the target terminal device in the at least one second terminal device.

In this implementation, the permission information of the second terminal device is considered when determining whether the Wi-Fi hotspot needs to jump, and the target terminal device is determined from the second terminal device that support hotspot jumping. Not all terminals in the WLAN are required to support hotspot jumping. This improves networking flexibility.

In a possible implementation, after the sending first jump information to the target terminal device, the method further includes: sending second jump information to a non-target terminal device, where the non-target terminal device is a second terminal device other than the target terminal device in the at least one second terminal device, and the second jump information is used to indicate the non-target terminal device to connect to the second Wi-Fi hotspot enabled by the target terminal device.

In a possible implementation, the method further includes: sending hotspot information of the target terminal device to the non-target terminal device.

In this implementation, the first terminal device sends the hotspot information of the target terminal device to the non-target terminal device, so that the non-target terminal device learns hotspot information of a new hotspot in advance, to shorten time for connecting to the new hotspot in a hotspot change process.

In a possible implementation, the second jump information and the hotspot information of the target terminal device are located in one message.

In this implementation, the first terminal device sends the second jump information and the hotspot information of the target terminal device to the non-target terminal device in one message, to reduce a signaling interaction procedure.

In a possible implementation, the method further includes: disabling display of a first icon on a screen of the first terminal device, and displaying a second icon, where the first icon is used to indicate the first terminal device to enable a Wi-Fi hotspot, and the second icon is used to indicate that the first terminal device enables a WLAN function and is connected to the Wi-Fi hotspot.

In a possible implementation, the method further includes: displaying prompt information, where the prompt information is used to indicate that the first Wi-Fi hotspot is disabled and the second Wi-Fi hotspot is connected.

In this implementation, a user may be intuitively notified of a hotspot jump change of the first terminal device by displaying the prompt information, to improve user experience.

In a possible implementation, before the obtaining mobile channel quality information and sharing capability information of the first terminal device through detection, the method further includes: displaying a target interface, where the target interface includes a first control and a second control, the first control is used to set whether a Wi-Fi hotspot is allowed to jump from the first terminal device to another terminal device, and the second control is used to set whether a Wi-Fi hotspot is allowed to jump from another terminal device to the first terminal device; receiving operations performed by a user on the first control and the second control; and generating permission information of the first terminal device in response to the operations.

In this implementation, the user may set whether the terminal device supports hotspot jumping, to improve setting flexibility.

According to a third aspect, a Wi-Fi hotspot switching method is provided, applied to a target terminal device. A first terminal device enables a first Wi-Fi hotspot, both the target terminal device and a non-target terminal device connect to the first Wi-Fi hotspot, and the method includes: obtaining mobile channel quality information and sharing capability information of the target terminal device through detection; sending the mobile channel quality information and the sharing capability information to the first terminal device; receiving first jump information sent by the first terminal device, where the first jump information is used to indicate the target terminal device to enable a second Wi-Fi hotspot; stopping connecting to the first Wi-Fi hotspot; and enabling the second Wi-Fi hotspot.

In a possible implementation, before the obtaining mobile channel quality information and sharing capability information of the target terminal device through detection, the method further includes: receiving a probe request broadcast by the first terminal device.

In a possible implementation, before the receiving first jump information sent by the first terminal device, the method further includes: sending permission information and hotspot information of the target terminal device to the first terminal device, where the permission information of the target terminal device is used to indicate whether a Wi-Fi hotspot is allowed to jump from the target terminal device to another terminal device and whether a Wi-Fi hotspot is allowed to jump from another terminal device to the target terminal device.

In a possible implementation, the method further includes: receiving permission information and hotspot information of each terminal device that are broadcast by the first terminal device.

In a possible implementation, after the receiving first jump information sent by the first terminal device, the method further includes: sending second jump information to the non-target terminal device, where the second jump information is used to indicate the non-target terminal device to connect to the second Wi-Fi hotspot enabled by the target terminal device.

In a possible implementation, the method further includes: sending the hotspot information of the target terminal device to the non-target terminal device.

In a possible implementation, the method further includes: disabling display of a first icon on a screen of the target terminal device, and displaying a second icon, where the first icon is used to indicate that the target terminal device enables a WLAN function and is connected to a Wi-Fi hotspot, and the second icon is used to indicate the target terminal device to enable the Wi-Fi hotspot.

In a possible implementation, the method further includes: displaying prompt information, where the prompt information is used to indicate that the target terminal device has enabled the second Wi-Fi hotspot.

In a possible implementation, before the obtaining mobile channel quality information and sharing capability information of the target terminal device through detection, the method further includes: displaying a target interface, where the target interface includes a first control and a second control, the first control is used to set whether a Wi-Fi hotspot is allowed to jump from the target terminal device to another terminal device, and the second control is used to set whether a Wi-Fi hotspot is allowed to jump from another terminal device to the target terminal device; receiving operations performed by a user on the first control and the second control; and generating the permission information of the target terminal device in response to the operations.

According to a fourth aspect, a Wi-Fi hotspot switching method is provided, applied to a non-target terminal device. A first terminal device enables a first wireless fidelity Wi-Fi hotspot, both the non-target terminal device and a target terminal device connect to the first Wi-Fi hotspot, and the method includes: obtaining mobile channel quality information and sharing capability information of the non-target terminal device through detection; sending the mobile channel quality information and the sharing capability information to the first terminal device; stopping connecting to the first Wi-Fi hotspot; and connecting to a second Wi-Fi hotspot enabled by the target terminal device.

In a possible implementation, before the obtaining mobile channel quality information and sharing capability information of the non-target terminal device through detection, the method further includes: receiving a probe request broadcast by the first terminal device.

In a possible implementation, before the stopping connecting to the first Wi-Fi hotspot, the method further includes: sending permission information and hotspot information of the non-target terminal device to the first terminal device, where the permission information of the non-target terminal device is used to indicate whether a Wi-Fi hotspot is allowed to jump from the non-target terminal device to another terminal device and whether a Wi-Fi hotspot is allowed to jump from another terminal device to the non-target terminal device.

In a possible implementation, the method further includes: receiving permission information and hotspot information of each terminal device that are broadcast by the first terminal device.

In a possible implementation, before the stopping connecting to the first Wi-Fi hotspot, the method further includes: receiving jump information sent by the first terminal device or the target terminal device, where the jump information is used to indicate the non-target terminal device to connect to the second Wi-Fi hotspot enabled by the target terminal device.

In a possible implementation, the method further includes: displaying prompt information, where the prompt information is used to indicate that the non-target terminal device has connected to the second Wi-Fi hotspot.

In a possible implementation, before the obtaining mobile channel quality information and sharing capability information of the target terminal device, the method further includes: displaying a target interface, where the target interface includes a first control and a second control, the first control is used to set whether a Wi-Fi hotspot is allowed to jump from the non-target terminal device to another terminal device, and the second control is used to set whether a Wi-Fi hotspot is allowed to jump from the another terminal device to the non-target terminal device; receiving operations performed by a user on the first control and the second control; and generating the permission information of the non-target terminal device in response to the operations.

According to a fifth aspect, a terminal device is provided, and is specifically a first terminal device. The first terminal device enables a first Wi-Fi hotspot, and at least one second terminal device is connected to the first Wi-Fi hotspot. The first terminal device may include a processing module, a sending module, and a receiving module. The processing module is configured to: obtain mobile channel quality information and sharing capability information of a first terminal device through detection, and obtain mobile channel quality information and sharing capability information of each second terminal device; and if it is determined, based on the mobile channel quality information and/or the sharing capability information of the first terminal device and the mobile channel quality information and/or the sharing capability information of each second terminal device, that a Wi-Fi hotspot jumps to a target terminal device in the at least one second terminal device, control the sending module to send first jump information to the target terminal device, where the first jump information is used to indicate the target terminal device to enable a second Wi-Fi hotspot. The processing module is further configured to disable the first Wi-Fi hotspot and connect to the second Wi-Fi hotspot.

In a possible implementation, the sending module is further configured to broadcast a probe request to the second terminal device. The receiving module is specifically configured to receive the mobile channel quality information and the sharing capability information of the second terminal device that are sent by the second terminal device.

In a possible implementation, the sending module is specifically configured to periodically broadcast the probe request.

In a possible implementation, the sending module is specifically configured to broadcast the probe request if the processing module determines that the mobile channel quality information of the first terminal device and/or the sharing capability information of the first terminal device meet/meets a preset condition.

In a possible implementation, the receiving module is further configured to: before the processing module disables the first Wi-Fi hotspot, receive permission information and hotspot information of the second terminal device that are sent by the second terminal device, where the permission information of the second terminal device is used to indicate whether a Wi-Fi hotspot is allowed to jump from the second terminal device to another terminal device and whether a Wi-Fi hotspot is allowed to jump from another terminal device to the second terminal device.

In a possible implementation, the sending module is further configured to broadcast permission information and hotspot information of each terminal device to the second terminal device.

In a possible implementation, the processing module is specifically configured to determine, based on the permission information of each second terminal device, the mobile channel quality information and/or the sharing capability information of the first terminal device, and the mobile channel quality information and/or the sharing capability information of each second terminal device, that the Wi-Fi hotspot jumps to the target terminal device in the at least one second terminal device.

In a possible implementation, the sending module is further configured to: after sending the first jump information to the target terminal device, send second jump information to a non-target terminal device, where the non-target terminal device is a second terminal device other than the target terminal device in the at least one second terminal device, and the second jump information is used to indicate the non-target terminal device to connect to the second Wi-Fi hotspot enabled by the target terminal device.

In a possible implementation, the sending module is further configured to send hotspot information of the target terminal device to the non-target terminal device.

In a possible implementation, the second jump information and the hotspot information of the target terminal device are located in one message.

In a possible implementation, the processing module is further configured to: disable display of a first icon on a screen of the first terminal device, and display a second icon, where the first icon is used to indicate the first terminal device to enable a Wi-Fi hotspot, and the second icon is used to indicate that the first terminal device enables a WLAN function and is connected to the Wi-Fi hotspot.

In a possible implementation, the processing module is further configured to display prompt information, where the prompt information is used to indicate that the first Wi-Fi hotspot is disabled and the second Wi-Fi hotspot is connected.

In a possible implementation, the processing module is further configured to: display a target interface before obtaining the mobile channel quality information and the sharing capability information of the first terminal device through detection, where the target interface includes a first control and a second control, the first control is used to set whether a Wi-Fi hotspot is allowed to jump from the first terminal device to another terminal device, and the second control is used to set whether a Wi-Fi hotspot is allowed to jump from another terminal device to the first terminal device; receive operations performed by a user on the first control and the second control; and generate permission information of the first terminal device in response to the operations.

According to a sixth aspect, a terminal device is provided, and is specifically a target terminal device, and accesses a first Wi-Fi hotspot enabled by a first terminal device. The target terminal device may include a processing module, a sending module, and a receiving module. The processing module is configured to obtain mobile channel quality information and sharing capability information of the target terminal device through detection. The sending module is configured to send the mobile channel quality information and the sharing capability information to the first terminal device. The receiving module is configured to receive first jump information sent by the first terminal device, where the first jump information is used to indicate the target terminal device to enable a second Wi-Fi hotspot. The processing module is further configured to stop connecting to the first Wi-Fi hotspot and enable the second Wi-Fi hotspot.

In a possible implementation, the receiving module is further configured to: before the processing module obtains mobile channel quality information and sharing capability information of the target terminal device through detection, receive a probe request broadcast by the first terminal device.

In a possible implementation, the sending module is further configured to: before the receiving module receives first jump information sent by the first terminal device, send permission information and hotspot information of the target terminal device to the first terminal device, where the permission information of the target terminal device is used to indicate whether a Wi-Fi hotspot is allowed to jump from the target terminal device to another terminal device and whether a Wi-Fi hotspot is allowed to jump from another terminal device to the target terminal device.

In a possible implementation, the receiving module is further configured to receive permission information and hotspot information of each terminal device that are broadcast by the first terminal device.

In a possible implementation, the sending module is further configured to: after the receiving module receives first jump information sent by the first terminal device, send second jump information to the non-target terminal device, where the second jump information is used to indicate the non-target terminal device to connect to the second Wi-Fi hotspot enabled by the target terminal device.

In a possible implementation, the sending module is further configured to send the hotspot information of the target terminal device to the non-target terminal device.

In a possible implementation, the processing module is further configured to disable display of a first icon on a screen of the target terminal device, and display a second icon, where the first icon is used to indicate that the target terminal device enables a WLAN function and is connected to a Wi-Fi hotspot, and the second icon is used to indicate the target terminal device to enable the Wi-Fi hotspot.

In a possible implementation, the processing module is further configured to display prompt information, where the prompt information is used to indicate that the target terminal device has enabled the second Wi-Fi hotspot.

In a possible implementation, the processing module is further configured to: display a target interface before obtaining the mobile channel quality information and the sharing capability information of the target terminal device through detection, where the target interface includes a first control and a second control, the first control is used to set whether a Wi-Fi hotspot is allowed to jump from the target terminal device to another terminal device, and the second control is used to set whether a Wi-Fi hotspot is allowed to jump from another terminal device to the target terminal device; receive operations performed by a user on the first control and the second control; and generate the permission information of the target terminal device in response to the operations.

According to a seventh aspect, a terminal device is provided. The terminal device is specifically a non-target terminal device, and accesses a first Wi-Fi hotspot enabled by a first terminal device. The non-target terminal device may include a processing module, a sending module, and a receiving module. The processing module is configured to: obtain mobile channel quality information and sharing capability information of the non-target terminal device through detection. The sending module is configured to send the mobile channel quality information and the sharing capability information to the first terminal device. The processing module is further configured to stop connecting to the first Wi-Fi hotspot and connect to a second Wi-Fi hotspot enabled by the target terminal device.

In a possible implementation, the receiving module is configured to: before the processing module obtains mobile channel quality information and sharing capability information of the non-target terminal device through detection, receive a probe request broadcast by the first terminal device.

In a possible implementation, the sending module is further configured to: before the processing module stops connecting to the first Wi-Fi hotspot, send permission information and hotspot information of the non-target terminal device to the first terminal device, where the permission information of the non-target terminal device is used to indicate whether a Wi-Fi hotspot is allowed to jump from the non-target terminal device to another terminal device and whether a Wi-Fi hotspot is allowed to jump from another terminal device to the non-target terminal device.

In a possible implementation, the receiving module is further configured to receive permission information and hotspot information of each terminal device that are broadcast by the first terminal device.

In a possible implementation, the receiving module is further configured to: before the processing module stops connecting to the first Wi-Fi hotspot, receive jump information sent by the first terminal device or the target terminal device, where the jump information is used to indicate the non-target terminal device to connect to the second Wi-Fi hotspot enabled by the target terminal device.

In a possible implementation, the processing module is further configured to display prompt information, where the prompt information is used to indicate that the non-target terminal device has connected to the second Wi-Fi hotspot.

In a possible implementation, the processing module is further configured to: display a target interface before obtaining the mobile channel quality information and the sharing capability information of the target terminal device, where the target interface includes a first control and a second control, the first control is used to set whether a Wi-Fi hotspot is allowed to jump from the non-target terminal device to another terminal device, and the second control is used to set whether a Wi-Fi hotspot is allowed to jump from the another terminal device to the non-target terminal device; receive operations performed by a user on the first control and the second control; and generate the permission information of the non-target terminal device in response to the operations.

According to an eighth aspect, a terminal device is provided. The terminal device includes a processor, and the processor is configured to: be coupled to a memory, read instructions in the memory, and enable, according to the instructions, the terminal device to perform the method provided in the second aspect, the third aspect, or the fourth aspect.

According to a ninth aspect, a program is provided. When being executed by a processor, the program is used to perform the method provided in the second aspect, the third aspect, or the fourth aspect.

According to a tenth aspect, a computer-readable storage medium is provided. The computer-readable storage medium stores instructions, and when the instructions are run on a computer or a processor, the method provided in the second aspect, the third aspect, or the fourth aspect is implemented.

According to an eleventh aspect, an embodiment of this application provides a program product. The program product includes a computer program, the computer program is stored in a readable storage medium, at least one processor of a device can read the computer program from the readable storage medium, and the at least one processor executes the computer program to enable the device to implement the method provided in the second aspect, the third aspect, or the fourth aspect.

### BRIEF DESCRIPTION OF DRAWINGS

FIG. 1 is a diagram of a system architecture to which embodiments of this application are applicable;
FIG. 2(a) to FIG. 2(c) are a diagram of an interface for setting a hotspot by a hotspot provider;
FIG. 3(a) to FIG. 3(c) are a diagram of an interface when a hotspot accessor accesses a hotspot;
FIG. 4 is a schematic diagram of a scenario in which Wi-Fi communication is performed by using a Wi-Fi hotspot;
FIG. 5 is a schematic diagram of a principle of Wi-Fi communication performed by a terminal device in a scenario shown in FIG. 4;
FIG. 6 is a schematic diagram of a scenario in which communication is performed by using a Wi-Fi hotspot according to an embodiment of this application;
FIG. 7A and FIG. 7B are a schematic diagram of a principle of Wi-Fi communication performed by a terminal device in a scenario shown in FIG. 6;
FIG. 8 is a schematic diagram of another scenario in which communication is performed by using a Wi-Fi hotspot according to an embodiment of this application;
FIG. 9(a) to FIG. 9(d) are a diagram of an interface for setting a hotspot by a hotspot provider according to an embodiment of this application;
FIG. 10 is a diagram of an interface when a hotspot accessor accesses a hotspot according to an embodiment of this application;
FIG. 11 is a schematic diagram of an interface change of an original hotspot provider before and after hotspot jumping according to an embodiment of this application;
FIG. 12 is a schematic diagram of an interface change of a new hotspot provider before and after hotspot jumping according to an embodiment of this application;
FIG. 13 is a schematic diagram of an interface change of another terminal device before and after hotspot jumping according to an embodiment of this application;
FIG. 14 is a diagram of a message exchange of a Wi-Fi hotspot switching method according to an embodiment of this application;
FIG. 15 is a diagram of another message exchange of a Wi-Fi hotspot switching method according to an embodiment of this application;
FIG. 16 is a diagram of still another message exchange of a Wi-Fi hotspot switching method according to an embodiment of this application;
FIG. 17 is a diagram of yet another message exchange of a Wi-Fi hotspot switching method according to an embodiment of this application;
FIG. 18 is a diagram of still yet another message exchange of a Wi-Fi hotspot switching method according to an embodiment of this application;
FIG. 19 is a schematic diagram of a structure of a terminal device according to an embodiment of this application; and
FIG. 20 is a schematic diagram of another structure of a terminal device according to an embodiment of this application.

### DESCRIPTION OF EMBODIMENTS

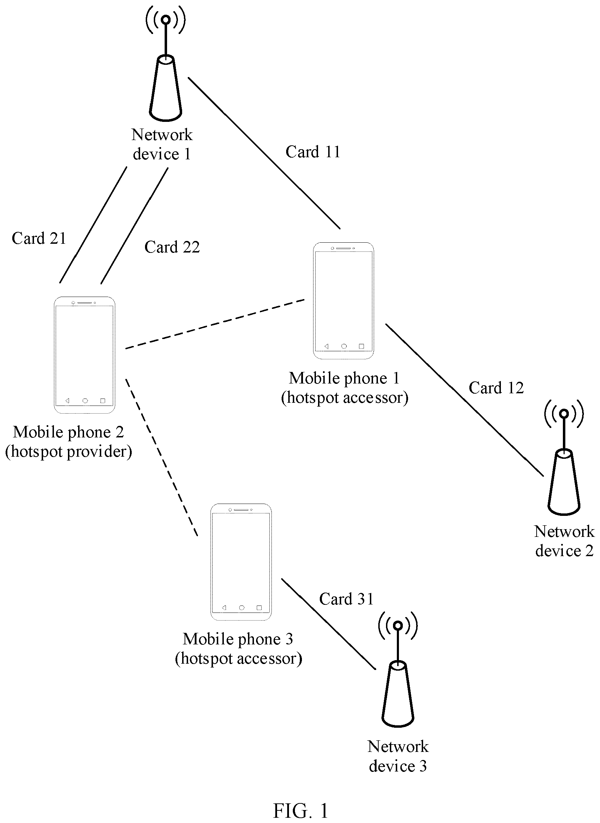

A Wi-Fi hotspot switching method provided in embodiments of this application is applied to a scenario in which at least two terminal devices perform Wi-Fi communication through mobile network sharing, and the at least two terminal devices include a hotspot device and an access device. For example, FIG. 1 is a diagram of a system architecture to which embodiments of this application are applicable. As shown in FIG. 1, a system includes three mobile phones and three network devices. A mobile phone 2 is a hotspot device, and is also referred to as a hotspot provider. The mobile phone 2 includes two subscriber identity module (subscriber identity module, SIM) cards: a card 21 and a card 22. The mobile phone 2 performs mobile communication with a network device 1 by using the card 21 and the card 22. The mobile phone 2 may establish a Wi-Fi hotspot based on the card 21 or the card 22, so that a mobile phone 1 and a mobile phone 3 share a traffic resource of the mobile phone 2. The mobile phone 1 and the mobile phone 3 are access devices, which are also referred to as hotspot users or hotspot accessors, and perform Wi-Fi communication by connecting to the Wi-Fi hotspot enabled by the mobile phone 2. The mobile phone 1 includes two SIM cards: a card 11 and a card 12. The mobile phone 1 performs mobile communication with the network device 1 by using the card 11, and performs mobile communication with a network device 2 by using the card 12. The mobile phone 3 includes one SIM card: a card 31. The mobile phone 3 performs mobile communication with a network device 3 by using the card 31.

Optionally, the network device 1, the network device 2, and the network device 3 may belong to a same mobile communication network, or may belong to different mobile communication networks.

It should be noted that FIG. 1 is merely an example. A quantity of terminal devices, a quantity of SIM cards of a terminal device, and a type of a network device are not limited, and a name and a type of a SIM card are not limited. For example, the SIM card may include but is not limited to: a standard card (standard SIM), a mini card (mini SIM), a micro card (micro SIM), and a super small card (nano SIM).

It should be noted that a name and a type of the terminal device are not limited in this embodiment of this application. For example, the terminal device is also referred to as a terminal, a mobile station (mobile station, MS), or a mobile terminal (mobile terminal, MT), and may be a device that provides voice/data connectivity for a user, for example, a handheld device or a vehicle-mounted device that has a wireless connection function. Currently, some examples of the terminal device include a mobile phone (mobile phone), a tablet computer, a palmtop computer, a wearable device, or the like.

It should be noted that in embodiments of this application, the Wi-Fi hotspot and a hotspot have a same meaning.

The following describes related interfaces of the hotspot provider and the hotspot accessor.

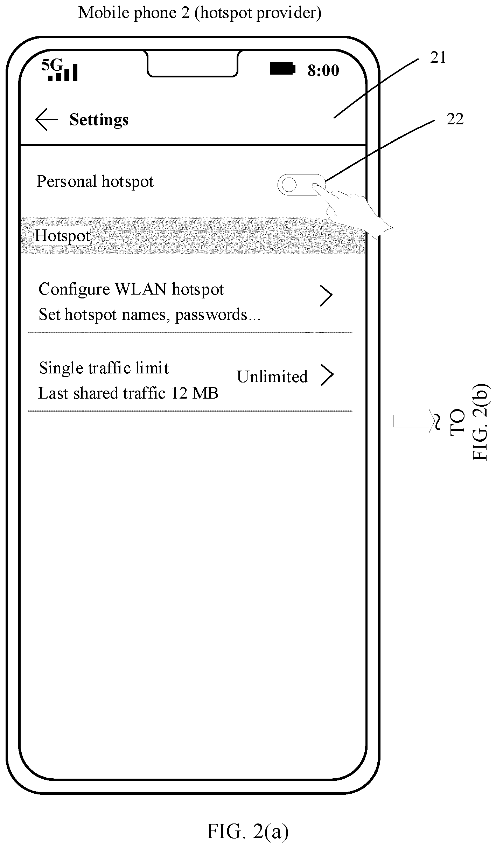

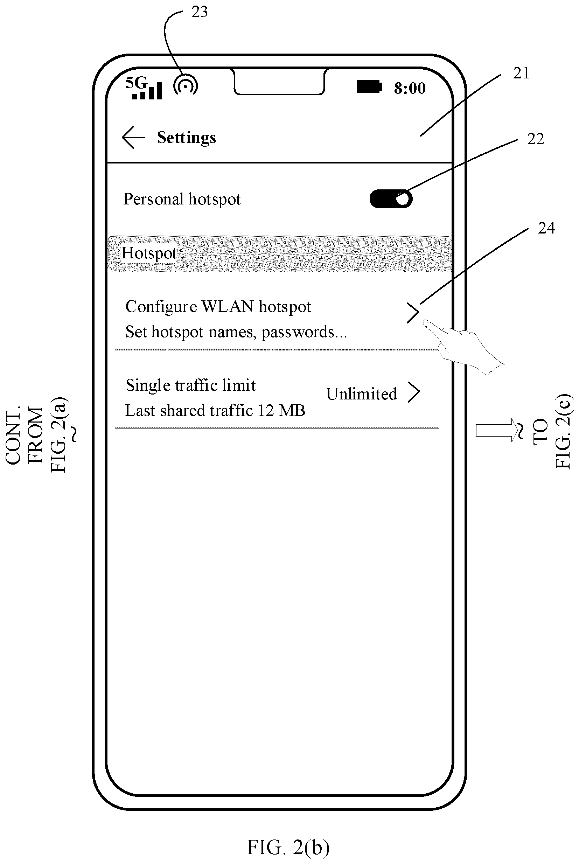

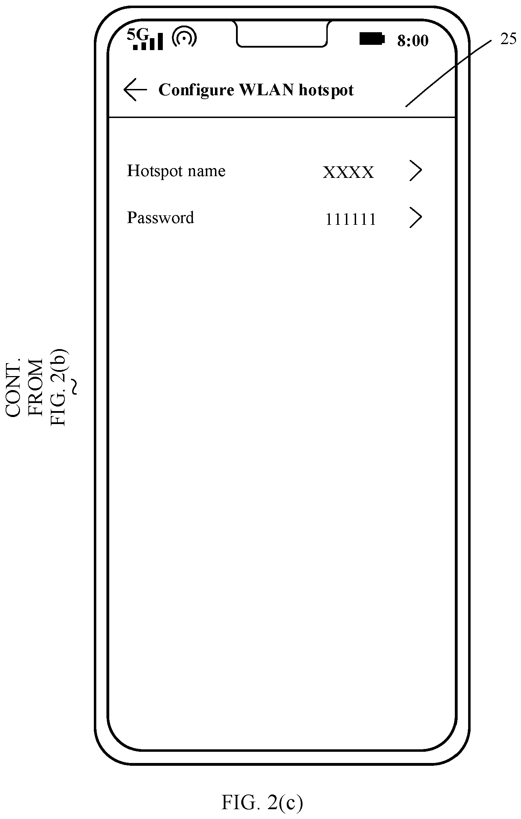

For example, FIG. 2(a) to FIG. 2(c) are a diagram of an interface for setting a hotspot by a hotspot provider. As shown in FIG. 2(a), a mobile phone 2 is a hotspot provider, and a setting interface 21 of the hotspot is currently displayed. A user may tap a switch control 22 in an interface 21. Correspondingly, the mobile phone 2 responds to an operation of tapping the switch control 22 by the user, to enable or disable the hotspot. When the hotspot is enabled or disabled, a display form of the switch control 22 is different. For example, in FIG. 2(a), the display form of the switch control 22 indicates that the hotspot is in a disabled state. In FIG. 2(b), the display form of the switch control 22 indicates that the hotspot is in an enabled state. After the mobile phone 2 enables the hotspot, a hotspot icon 23 may be displayed on a top of the mobile phone 2, to indicate that a current hotspot is enabled. The interface 21 includes a plurality of function tabs, for example, a "configure WLAN hotspot" tab and a "single traffic limit" tab. The user can tap different function tabs to perform corresponding settings. For example, the user taps a "configure WLAN hotspot" tab 24, and correspondingly, the mobile phone 2 responds to the operation of tapping the "configure WLAN hotspot" tab 24 by the user, and displays a WLAN hotspot configuration interface 25, as shown in FIG. 2(c). A subscriber can set a hotspot name and an access password. For example, the hotspot name is XXXX and the access password is 111111.

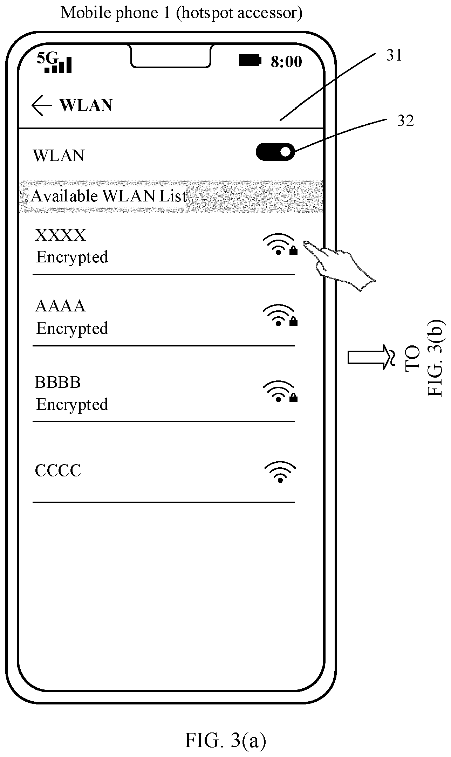

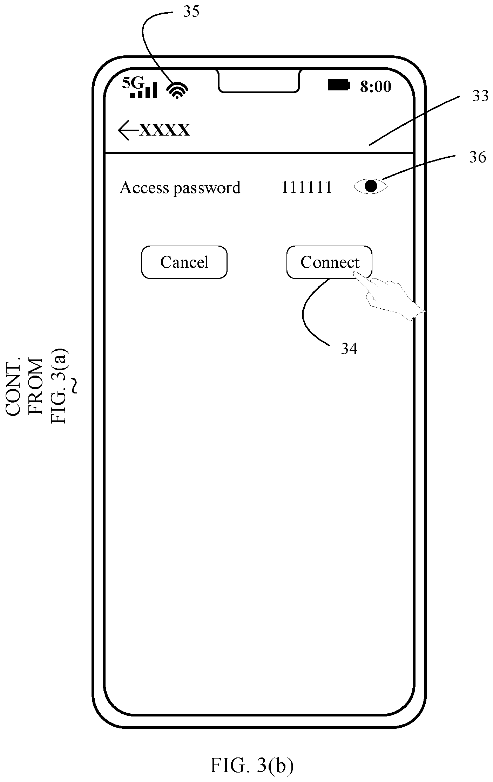

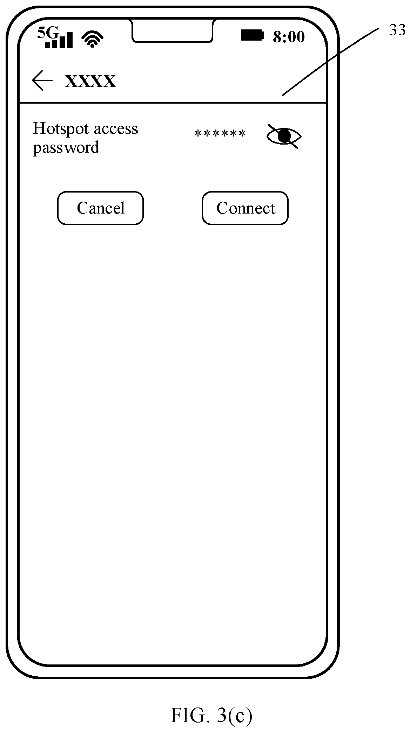

For example, FIG. 3(a) to FIG. 3(c) are a diagram of an interface when a hotspot accessor accesses a hotspot. The mobile phone 1 is the hotspot accessor, and needs to connect to the hotspot XXXX enabled by the mobile phone 2. As shown in FIG. 3(a), the mobile phone 1 currently displays a WLAN interface 31. The interface 31 includes a switch control 32. The user may tap the switch control 32. Correspondingly, the mobile phone 1 responds to the operation of tapping the switch control 32 by the user, to enable or disable a WLAN function. When the WLAN function is enabled or disabled, a display form of the switch control 32 is different. For example, in FIG. 3(a), the display form of the switch control 32 indicates that the WLAN function is enabled. After the mobile phone 1 enables the WLAN function, the mobile phone 1 may detect and discover a surrounding WLAN network, and display a detection result on the interface 31. For example, a list of available WLANs includes four WLAN networks whose names are respectively XXXX, AAAA, BBBB, and CCCC. Passwords are required for connecting to the networks XXXX, AAAA, and BBBB. No password is required for connecting to the network CCCC. In this embodiment of this application, a quantity of displayed WLAN networks and a display sequence of displayed WLAN networks are not limited. Optionally, display may be performed in descending order of signals from strong to weak. Optionally, a historically connected WLAN network may be displayed in front. The user taps the network XXXX on the interface 31. Correspondingly, the mobile phone 1 responds to the tapping operation of the user, and displays an interface 33 of the network XXXX, as shown in FIG. 3(b). In the interface 33, the user may input an access password "111111" of the network XXXX, and tap a "connect" key 34. Correspondingly, the mobile phone 1 responds to an operation of the user, and is connected to the network XXXX. After the connection is successful, a Wi-Fi icon 35 may be displayed on a top of the mobile phone 1, to indicate that a current Wi-Fi function is enabled and the connection is successful. The interface 33 further includes a control 36. The user may tap the control 36 to display or hide the access password of the hotspot. For example, in FIG. 3(b), the mobile phone 1 currently displays an access password, which is specifically " 111111". In FIG. 3(c), the mobile phone 1 displays the access password in a hidden manner.

It should be noted that FIG. 2(a) to FIG. 2(c) and FIG. 3(a) to FIG. 3(c) are merely examples, and do not constitute a limitation on a related interface and display content in the interface.

Currently, when a plurality of terminal devices perform Wi-Fi communication by using a hotspot, a hotspot provider and a hotspot accessor are fixed, communication quality of the hotspot accessor completely depends on the fixed hotspot provider, and a networking form is single. When the fixed hotspot provider cannot provide a hotspot or communication quality of a provided hotspot is poor, communication quality of an entire wireless local area network is poor and is difficult to improve.

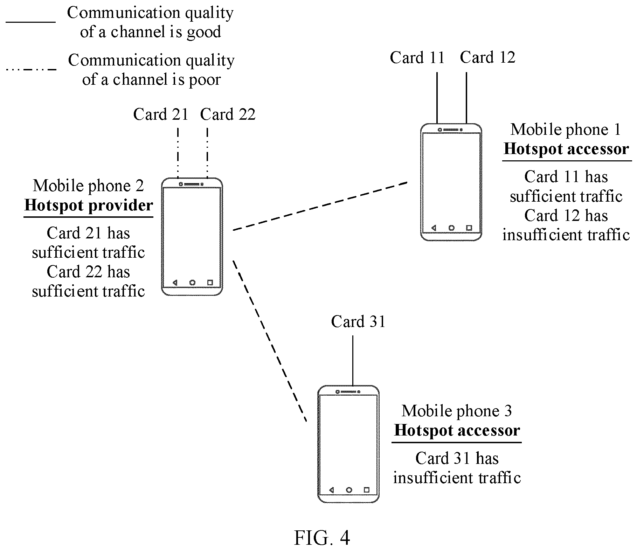

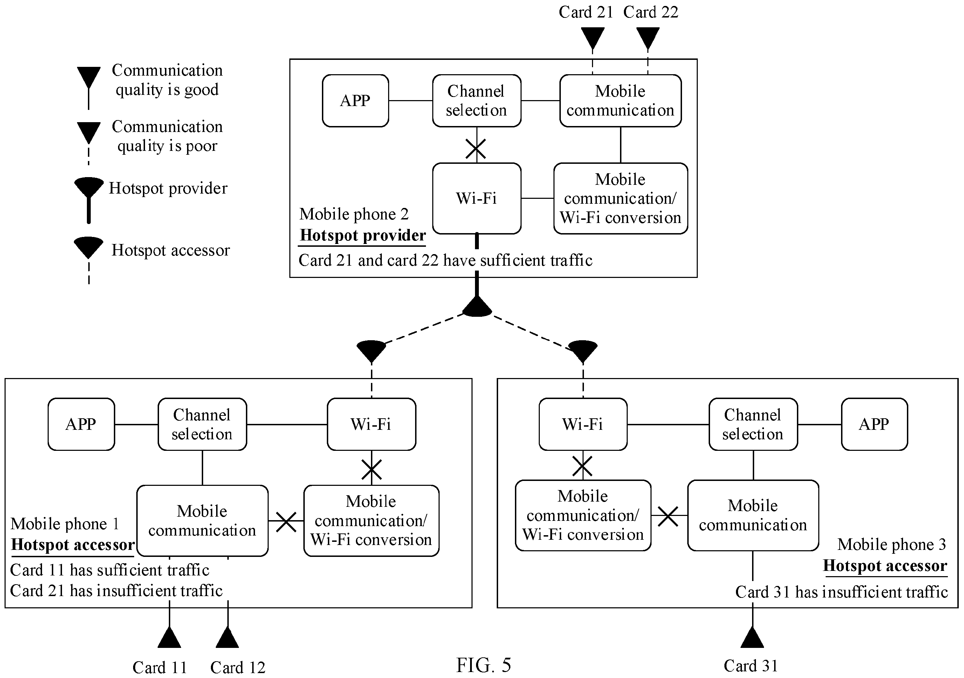

For example, in an application scenario, FIG. 4 is a schematic diagram of a scenario in which Wi-Fi communication is performed by using a Wi-Fi hotspot, and FIG. 5 is a schematic diagram of a principle of Wi-Fi communication performed by a terminal device in the scenario shown in FIG. 4. As shown in FIG. 5, each mobile phone includes the following modules: an application (application, APP) module, a channel selection module, a mobile communication module, a Wi-Fi module, and a mobile communication/Wi-Fi conversion module. The APP module is configured to process APP-related data. The channel selection module is configured to select a communication channel, and the communication channel includes a mobile channel and a Wi-Fi channel. The mobile communication module is configured to transmit data through a mobile channel. The Wi-Fi module is configured to transmit data through a Wi-Fi channel. The mobile communication/Wi-Fi conversion module is configured to provide a Wi-Fi hotspot based on mobile communication. As shown in FIG. 4 and FIG. 5, a mobile phone 2 is a fixed hotspot provider, and a mobile communication/Wi-Fi conversion module in the mobile phone 2 may enable a Wi-Fi hotspot based on a card 21 or a card 22. Traffic of the card 21 and the card 22 are sufficient, but mobile communication quality is poor. Service data of an APP on the mobile phone 2 is transmitted by using a mobile communication network. A mobile phone 1 and a mobile phone 3 are fixed hotspot accessors, and mobile communication/Wi-Fi conversion modules in the mobile phone 1 and the mobile phone 3 cannot provide a Wi-Fi hotspot based on mobile communication. For the mobile phone 1, the traffic of the card 11 is sufficient, the traffic of the card 12 is insufficient, and mobile communication quality is good. Service data of an APP on the mobile phone 1 is transmitted by connecting to a hotspot enabled by the mobile phone 2. For the mobile phone 3, traffic of the card 31 is insufficient, but mobile communication quality is good. Service data of an APP on the mobile phone 3 is transmitted by connecting to the hotspot enabled by the mobile phone 2.

It can be learned that the mobile phone 2 is the fixed hotspot provider, and the mobile phone 1 and the mobile phone 3 are the fixed hotspot accessors. Because mobile communication quality of the mobile phone 2 is poor, communication quality of the provided hotspot is poor, and communication quality of the mobile phone 1 and the mobile phone 3 connected to the hotspot is also poor.

According to a Wi-Fi hotspot switching method provided in this embodiment of this application, a hotspot provider may jump to determine, based on mobile communication quality and a sharing capability of each terminal device in a wireless local area network, whether the hotspot provider needs to be changed. In a plurality of terminal devices, if there is a more appropriate terminal device that can provide a hotspot than an original hotspot provider, the hotspot provider may jump. The original hotspot provider disables the hotspot, and a new hotspot provider enables a hotspot, to improve networking flexibility of the wireless local area network. By jumping the hotspot, communication quality of a new hotspot is improved, communication quality of a terminal device connected to the new hotspot is improved, and communication quality of the entire wireless local area network is improved.

The following describes, with reference to an application scenario, an effect of a Wi-Fi hotspot switching method provided in embodiments of this application by using an example.

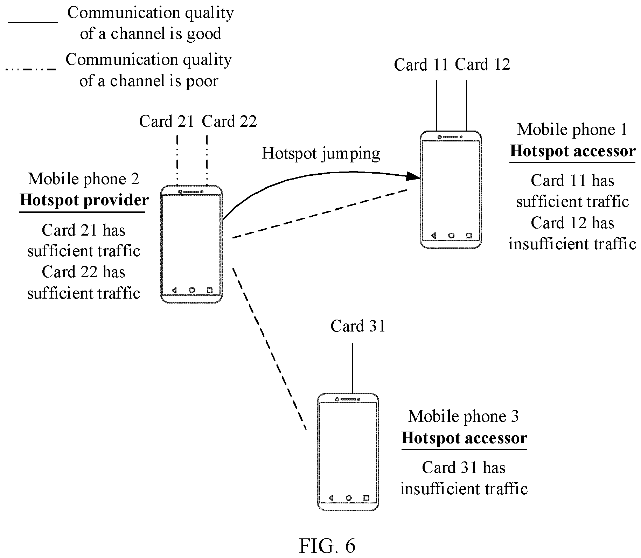

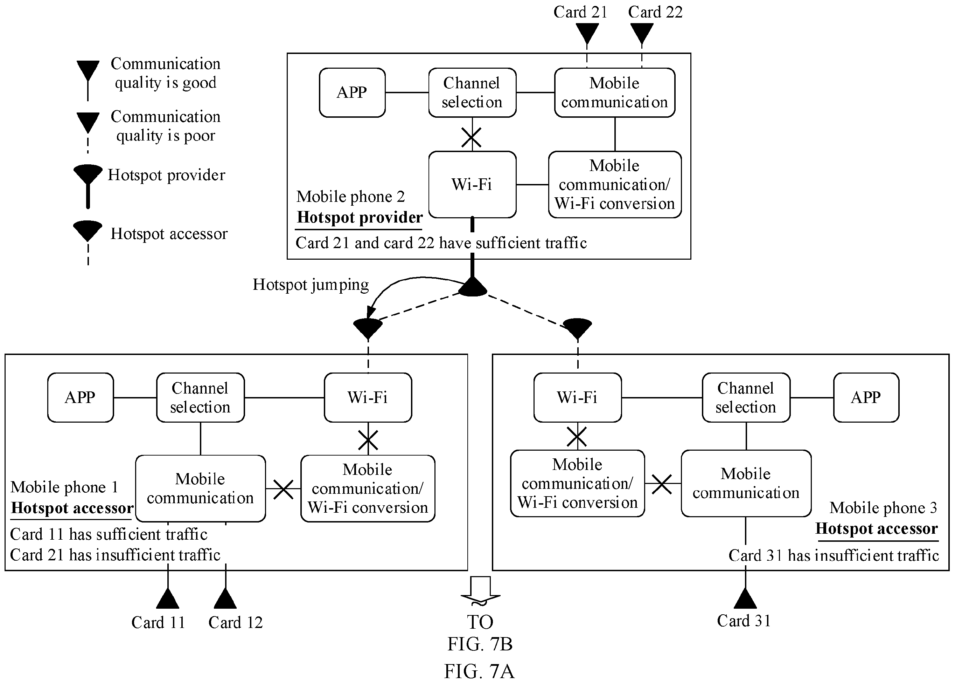

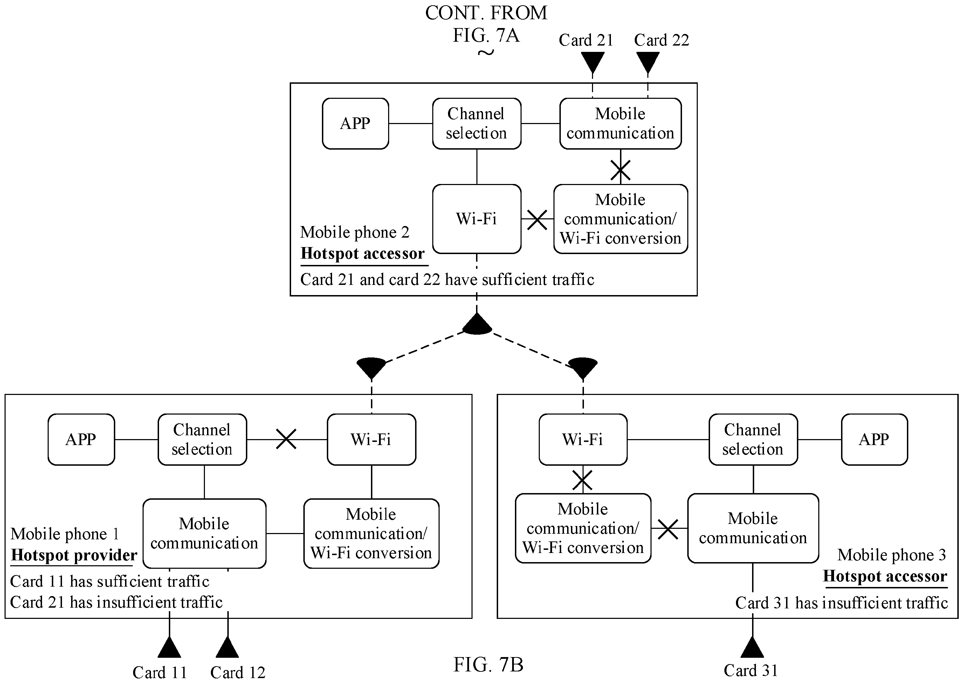

Optionally, in a scenario, FIG. 6 is a schematic diagram of a scenario in which communication is performed by using a Wi-Fi hotspot according to an embodiment of this application, and FIG. 7A and FIG. 7B are a schematic diagram of a principle of performing Wi-Fi communication by a terminal device in the scenario shown in FIG. 6. The scenario shown in FIG. 6 is the same as that shown in FIG. 4. A difference lies in that in FIG. 4 and FIG. 5, a hotspot provider and a hotspot accessor are fixed. However, in FIG. 6 and FIG. 7A and FIG. 7B, because mobile communication quality of a mobile phone 2 is poor, mobile communication quality of a mobile phone 1 is good, and traffic of a card 11 of the mobile phone 1 is sufficient, a hotspot automatically jumps, and jumps from the mobile phone 2 to the mobile phone 1. The mobile phone 2 is an original hotspot provider, the mobile phone 1 is a new hotspot provider, the mobile phone 1 enables a new hotspot based on the card 11, and the mobile phone 2 and a mobile phone 3 are connected to the new hotspot provided by the mobile phone 1. As shown in FIG. 7A and FIG. 7B, service data of an APP on the mobile phone 1 is transmitted by using a mobile communication network, and service data of APPs on the mobile phone 2 and the mobile phone 3 is transmitted by connecting to the new hotspot enabled by the mobile phone 1.

It can be learned that, in a scenario in which mobile communication quality of an original hotspot provider is poor, communication quality of a new hotspot is improved through hotspot jumping, to improve communication quality of an entire wireless local area network.

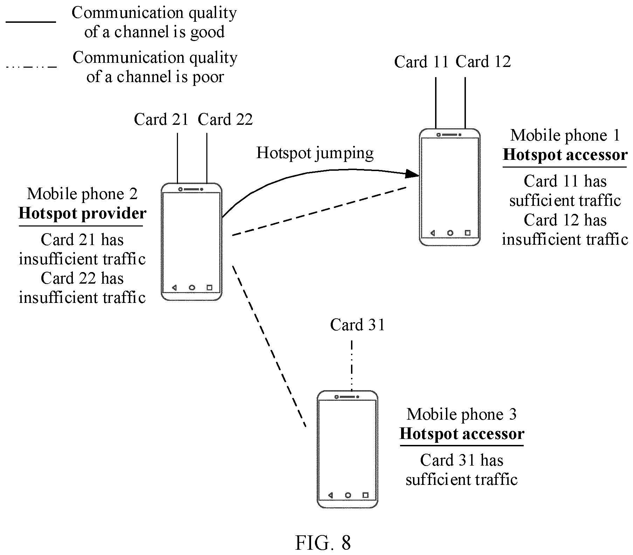

Optionally, in another scenario, FIG. 8 is a schematic diagram of another scenario in which communication is performed by using a Wi-Fi hotspot according to an embodiment of this application. As shown in FIG. 8, a mobile phone 2 currently provides a hotspot. Mobile communication quality of the mobile phone 2 is good, but traffic of a card 21 and a card 22 of the mobile phone 2 is insufficient. However, mobile communication quality of a mobile phone 1 is good, and traffic of a card 11 of the mobile phone 1 is sufficient. Therefore, the hotspot automatically jumps, and jumps from the mobile phone 2 to the mobile phone 1. The mobile phone 2 is an original hotspot provider, and the mobile phone 1 is a new hotspot provider.

It can be learned that, in a scenario in which a sharing capability of an original hotspot provider is insufficient, a sharing capability of a new hotspot is improved through hotspot jumping, and communication quality of the new hotspot is ensured, to improve communication quality of an entire wireless local area network.

Related interfaces in embodiments of this application are described below.

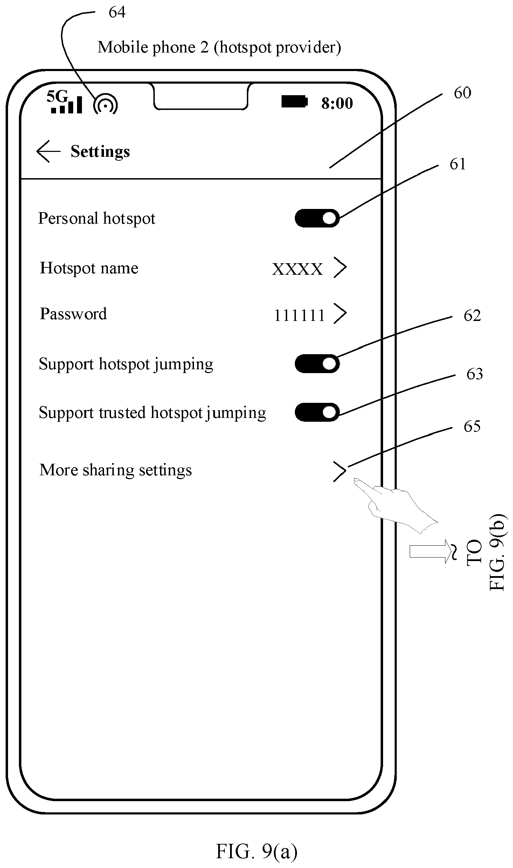

For example, FIG. 9(a) to FIG. 9(d) are a diagram of an interface for setting a hotspot by a hotspot provider according to an embodiment of this application. A main difference between FIG. 9(a) to FIG. 9(d) and FIG. 2(a) to FIG. 2(c) lies in that: a hotspot setting interface shown in FIG. 9(a) to FIG. 9(d) includes switches of two functions: a "support hotspot jumping" function and a "support trusted hotspot jumping" function. The support hotspot jumping function allows a hotspot to jump from a local device to another terminal device. After the hotspot jumps, the local device disables the hotspot and another terminal device enable a hotspot as a new hotspot. The local device can access the new hotspot. The support trusted hotspot jumping function allows a hotspot to jump from another terminal device to the local device. After the hotspot jumps, the original hotspot provider disables the hotspot, and the local device enables a hotspot as a new hotspot. The local device is the new hotspot provider, and the original hotspot provider can access the new hotspot enabled by the local device.

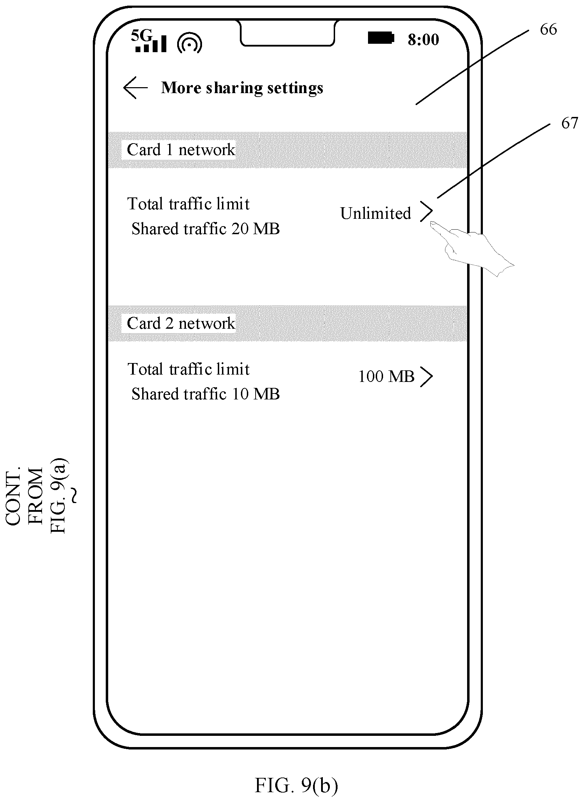

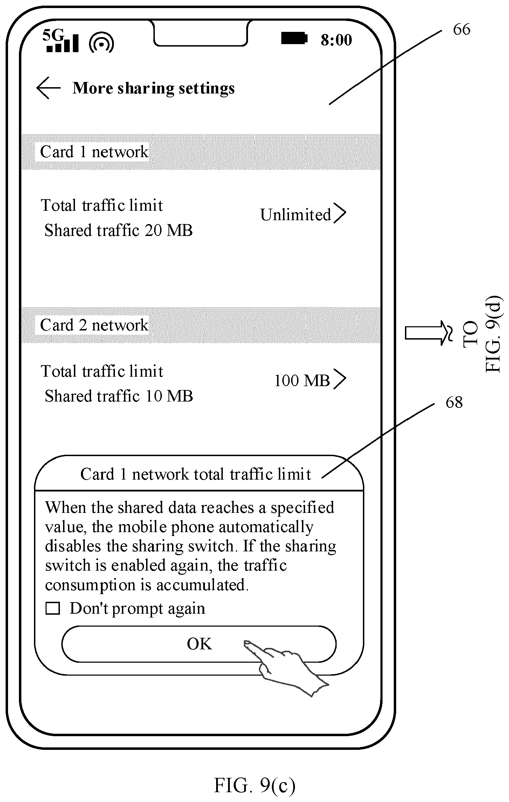

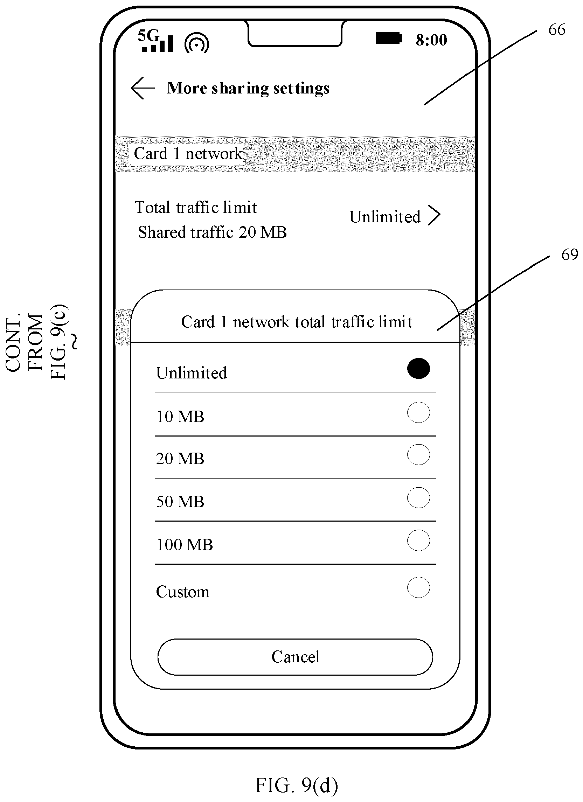

As shown in FIG. 9(a), a mobile phone 2 is a hotspot provider, and a hotspot setting interface 60 is currently displayed. The interface 60 includes a switch control 61 of a hotspot, a switch control 62 of support hotspot jumping, and a switch control 63 of support trusted hotspot jumping. A user may tap different switch controls to enable or disable corresponding functions, and different display forms of the switch controls may indicate whether the functions are enabled. For example, in FIG. 9(a), the mobile phone 2 has enabled a hotspot, and a hotspot icon 64 may be displayed on a top of the mobile phone 2, to indicate that the hotspot is currently enabled. The interface 60 further includes a function tab, for example, a "hotspot name" tab, a "password" tab, and a "more sharing settings" tab. The user can tap different function tabs to perform corresponding settings. For example, the user taps the "more sharing settings" tab 65. Correspondingly, the mobile phone 2 responds to the operation of the user, and displays an interface 66 of more sharing settings, as shown in FIG. 9(b). A sharing parameter of each SIM card is displayed on the interface 66. A name and a value range of the sharing parameter are not limited in this embodiment of this application. Optionally, the sharing parameter includes but is not limited to at least one of the following: a total traffic limit, a single sharing traffic limit, a total sharing time limit, a single sharing time limit, or a sharing rate limit. The user may set a sharing parameter of each SIM card on the interface 66. For example, the user taps a "total traffic limit" tab 67 of a network of a card 1. Correspondingly, the mobile phone 2 responds to the operation of the user, and a window 68 pops up on the interface 66, as shown in FIG. 9(c). The user may perform an operation by viewing prompt information in the window 68. For example, the prompt information includes: "When the shared data reaches a specified value, the mobile phone automatically disables the sharing switch. If the sharing switch is enabled again, the traffic consumption is accumulated.". The window 68 further includes an OK key. The user may tap the OK key. Correspondingly, the mobile phone 2 responds to the operation of the user, closes the window 68, pops up a window 69 on the interface 66, and continues to perform parameter setting, as shown in FIG. 9(d). The window 69 includes different options of the total traffic limit, for example, unlimited, 10 MB, 20 MB, 50 MB, 100 MB, and custom, which may be selected by the user as required. Correspondingly, the mobile phone 2 sets a total traffic limit of a network of the card 1 based on a selection operation of the user.

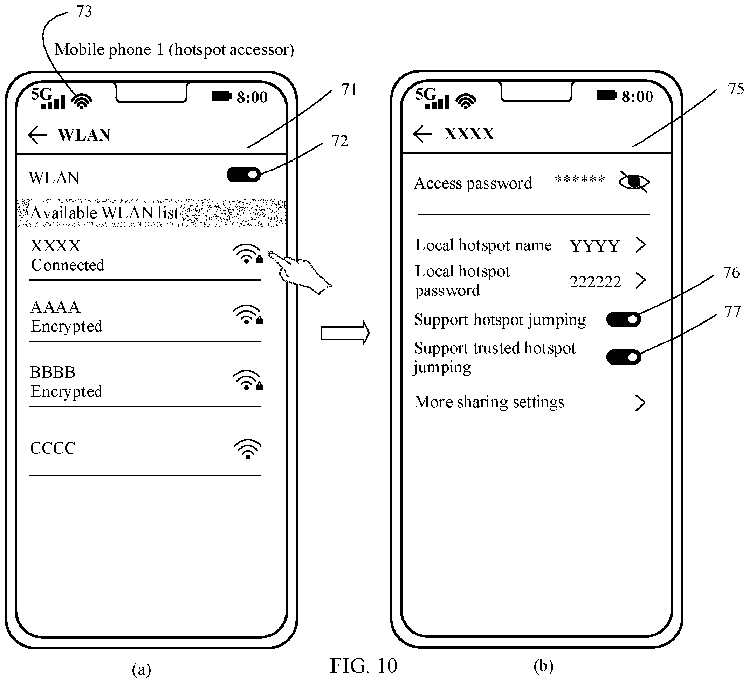

For example, FIG. 10 is a diagram of an interface when a hotspot accessor accesses a hotspot according to an embodiment of this application. A main difference between FIG. 10 and FIG. 3(a) to FIG. 3(c) lies in that: the interface shown in FIG. 10 includes switches of two functions: a "support hotspot jumping" function and a "support trusted hotspot jumping" function. For details, refer to related descriptions in FIG. 9(a) to FIG. 9(d). Details are not described herein.

As shown in (a) in FIG. 10, a mobile phone 1 is a hotspot accessor, and a WLAN interface 71 is currently displayed. The interface 71 includes a switch control 72 of a WLAN function and an available WLAN list. For details, refer to related descriptions in FIG. 3(a) to FIG. 3(c). Details are not described herein again. The mobile phone 1 is currently connected to a hotspot XXXX enabled by a mobile phone 2, and a Wi-Fi icon 73 is displayed on a top of the mobile phone 1, to indicate that a current WLAN function is enabled and the connection is successful. In the interface 71, prompt information "connected" is displayed below the network XXXX, to indicate that the mobile phone 1 is currently connected to the network XXXX. The user may tap the network XXXX on the interface 71. Correspondingly, the mobile phone 1 responds to the tap operation of the user, and displays an interface 75 of the network XXXX, as shown in (b) in FIG. 10. The interface 75 includes an access password, which is specifically a password for connecting to the network XXXX. The interface 75 further includes a hotspot-related parameter of the mobile phone 1, and the user may set the hotspot parameter of the mobile phone 1 in the interface 75. For example, the interface 75 further includes a "local hotspot name" selection card, a "local hotspot password" selection card, a switch control 76 of support hotspot jumping, a switch control 77 of support trusted hotspot jumping, and a "more sharing settings" selection card. For details, refer to related descriptions in FIG. 9(a) to FIG. 9(d). Details are not described herein again.

Optionally, in this embodiment of this application, after the hotspot jumps, prompt information may be displayed on a display interface of a terminal device, and the user is notified of a current hotspot connection status of the terminal device. Terminal devices of different roles correspond to different prompt information. Specific content of the prompt information is not limited in this embodiment of this application. For example, the scenario shown in FIG. 6 or FIG. 8 is used as an example to describe the prompt information. The mobile phone 2 is an original hotspot provider, the mobile phone 1 is a new hotspot provider, and the mobile phone 3 is a terminal device other than the original hotspot provider and the new hotspot provider in the wireless local area network. A hotspot name of the mobile phone 2 is XXXX, and a hotspot name of the mobile phone 1 is YYYY.

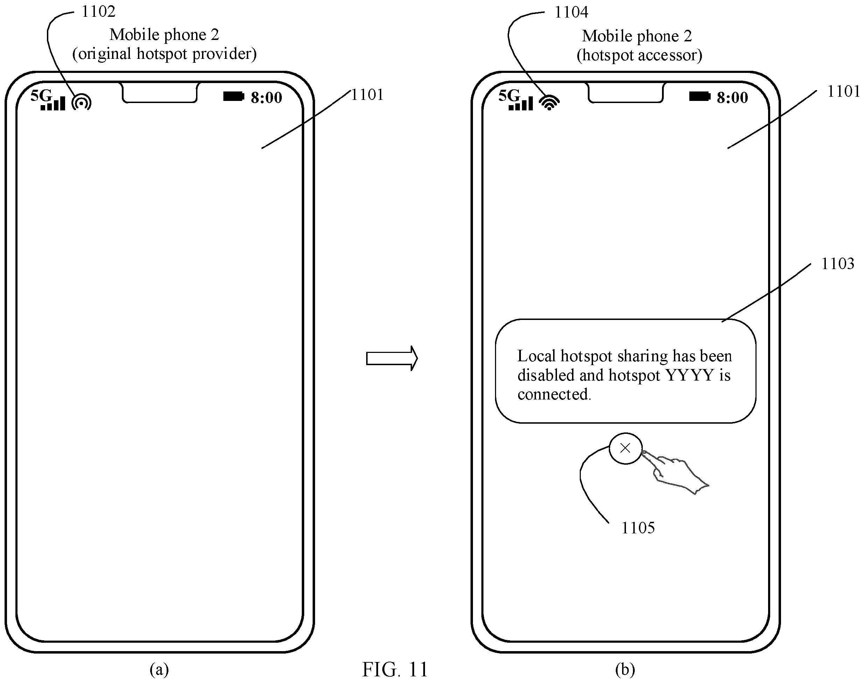

For example, FIG. 11 is a schematic diagram of an interface change of an original hotspot provider before and after hotspot jumping according to an embodiment of this application. As shown in (a) in FIG. 11, before the hotspot jumping, the mobile phone 2 is a hotspot provider, the mobile phone 2 currently displays an interface 1101, and a hotspot icon 1102 is displayed on a top of the mobile phone 2, to indicate that the current hotspot is enabled. When the hotspot jumps and the mobile phone 2 is connected to the hotspot YYYY of the mobile phone 1, the mobile phone 2 changes to a hotspot accessor, and the mobile phone 2 displays prompt information on an interface, to indicate that the hotspot enabled by the mobile phone 2 is disabled and the mobile phone 2 has connected to the hotspot enabled by the new hotspot provider. For example, as shown in (b) in FIG. 11, a window 1103 pops up on the interface 1101, and prompt information in the window 1103 is "Local hotspot sharing is disabled, and the hotspot YYYY is connected". The top of the mobile phone 2 changes the hotspot icon 1102 to a Wi-Fi icon 1104, to indicate that a current WLAN function is enabled and the connection is successful. Optionally, the interface 1101 further includes a close button 1105. The user may tap the close button 1105. Correspondingly, the mobile phone 2 closes the window 1103 in response to the operation of tapping the close button 1105 by the user.

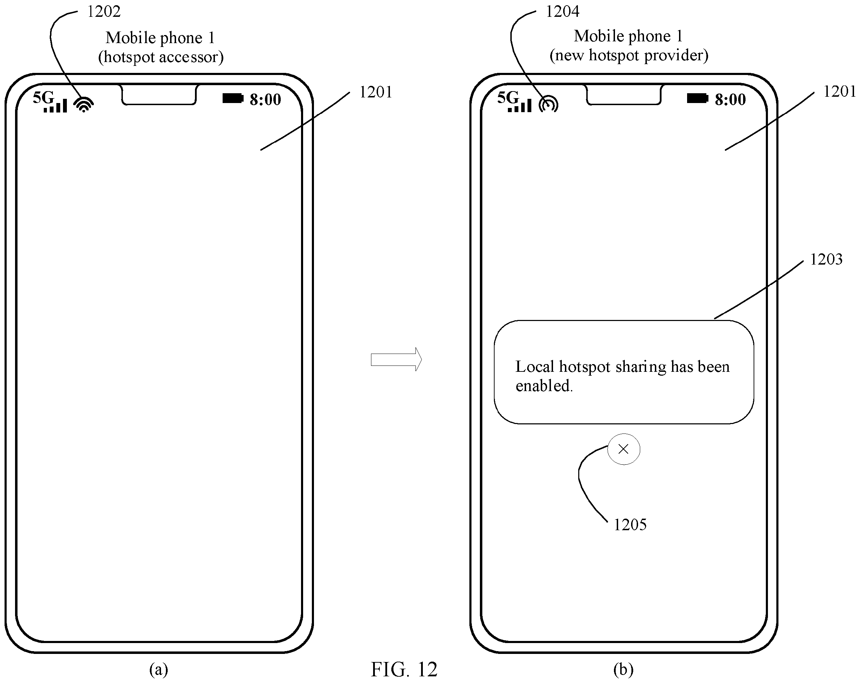

For example, FIG. 12 is a schematic diagram of an interface change of a new hotspot provider before and after hotspot jumping according to an embodiment of this application. As shown in (a) in FIG. 12, before the hotspot jumping, the mobile phone 1 is a hotspot accessor, and is connected to the hotspot XXXX enabled by the mobile phone 2. The mobile phone 1 currently displays an interface 1201, and a Wi-Fi icon 1202 is displayed on a top of the mobile phone 1, to indicate that a current WLAN function is enabled and the connection is successful. When the hotspot jumps and the mobile phone 1 enables the hotspot YYYY, the mobile phone 1 changes to a new hotspot provider, and the mobile phone 1 displays prompt information on an interface, to indicate that the mobile phone 1 has enabled the hotspot. For example, as shown in (b) in FIG. 12, a window 1203 pops up in the interface 1201, and prompt information in the window 1203 is "Local hotspot sharing is enabled". The Wi-Fi icon 1202 on the top of the mobile phone 1 is changed to a hotspot icon 1204, to indicate that the current hotspot is enabled. Optionally, the interface 1201 further includes a close button 1205. For details, refer to descriptions of the close button 1105 in FIG. 11. Details are not described herein again.

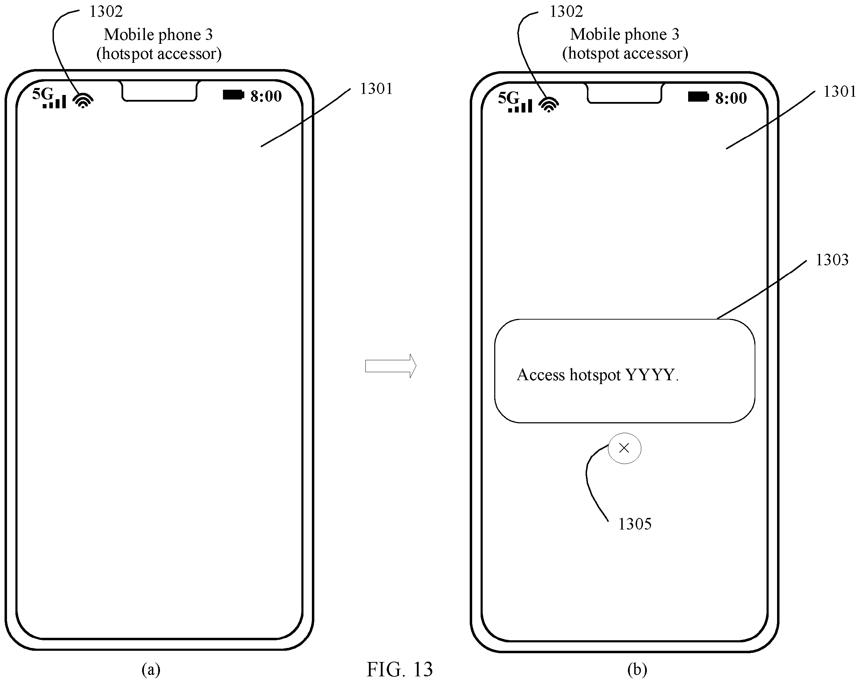

For example, FIG. 13 is a schematic diagram of an interface change of another terminal device before and after hotspot jumping according to an embodiment of this application. The mobile phone 3 is a hotspot accessor before and after hotspot jumping. As shown in (a) in FIG. 13, before the hotspot jumps, the mobile phone 3 is connected to the hotspot XXXX enabled by the mobile phone 1. An interface 1301 is currently displayed on the mobile phone 3, and a Wi-Fi icon 1302 is displayed on a top of the mobile phone 3, to indicate that a current WLAN function is enabled and the connection is successful. After the hotspot jumps and the mobile phone 3 is connected to the hotspot YYYY enabled by the mobile phone 2, the mobile phone 3 displays prompt information on an interface, to indicate that the mobile phone 3 has connected to the hotspot enabled by the new hotspot provider. For example, as shown in (b) in FIG. 13, a window 1303 pops up on the interface 1301, and prompt information in the window 1303 is "access hotspot YYYY". The Wi-Fi icon 1302 is still displayed on the top of the mobile phone 3, and does not change. Optionally, the interface 1301 further includes a close button 1305. For details, refer to descriptions of the close button 1105 in FIG. 11. Details are not described herein again.

It should be noted that FIG. 9(a) to FIG. 9(d) to FIG. 13 are merely examples, and do not constitute a limitation on a related interface and display content in the interface.

The following describes concepts related to embodiments of this application.

### 1. Mobile channel and Wi-Fi channel

A communication channel used when a terminal device communicates with a network device by using a mobile network is referred to as the mobile channel, and each SIM card in the terminal device corresponds to a mobile channel. For example, as shown in FIG. 1, the mobile phone 1 includes the card 11 and the card 12. The mobile phone 1 performs mobile communication with the network device 1 by using the card 11, and a communication channel corresponding to the card 11 is referred to as a mobile channel 11. The mobile phone 1 performs mobile communication with the network device 2 by using the card 12, and a communication channel corresponding to the card 12 is referred to as a mobile channel 12.

A communication channel used by the terminal device to implement Wi-Fi communication is referred to as the Wi-Fi channel.

### 2. Mobile channel quality information

Information used to reflect communication quality of a mobile channel.

The mobile channel quality information may include, but is not limited to, at least one of the following: an uplink and downlink air interface bandwidth, an uplink and downlink air interface delay, an uplink and downlink air interface rate, or a packet loss rate.

Optionally, the uplink and downlink air interface delays may include buffer time (Buffer time) of data in a buffer area.

### 3. Sharing capability information

Information used to reflect a traffic sharing capability of a SIM card.

The sharing capability information may include remaining traffic that can be shared.

Optionally, the sharing capability information may further include a sharing limited rate.

Optionally, the sharing capability information may further include: remaining traffic that can be shared at a single time and/or a limited rate that can be shared at a single time.

Optionally, the sharing capability information may further include but is not limited to at least one of the following: a package tariff or remaining traffic of a package.

### 4. Permission information

The permission information of a terminal device is used to indicate whether a hotspot is allowed to jump from the terminal device to another terminal device, and is used to indicate whether the hotspot is allowed to jump from another terminal device to the terminal device.

Optionally, the permission information of the terminal device may be a preset value, and different terminal types, terminal vendors, or terminal versions may correspond to different preset values.

Optionally, a user may set the permission information of the terminal device. For example, in the interface shown in FIG. 9(a) to FIG. 9(d) or FIG. 10, the permission information is set by using switch controls of "support hotspot jumping" and "support trusted hotspot jumping".

### 5. Hot spot information

The hotspot information of a terminal device may include but is not limited to a name and an access password of a hotspot.

The following describes the technical solutions of this application in detail with reference to specific embodiments. The following specific embodiments may be combined with each other, and a same or similar concept or process may not be described repeatedly in some embodiments.

The terms "first", "second", "third", "fourth", and the like (if any) in this application are intended to distinguish between similar objects but do not necessarily indicate a specific order or sequence.

It should be noted that, in this embodiment of this application, a terminal device may discover a WLAN network and connect to the WLAN network by using an existing communication procedure. Details are not described in this embodiment of this application.

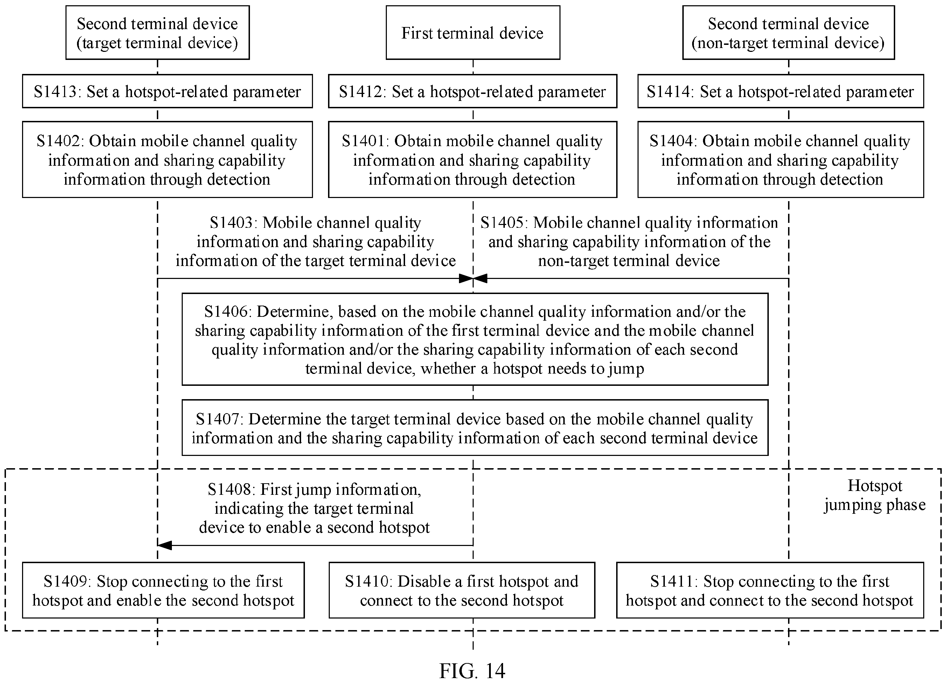

FIG. 14 is a diagram of a message exchange of a Wi-Fi hotspot switching method according to an embodiment of this application. This embodiment is executed by a first terminal device, a target terminal device, and a non-target terminal device. For ease of description, before a hotspot jumps, an original hotspot provider may be referred to as the first terminal device, a hotspot enabled by the first terminal device is referred to as a first hotspot, and a terminal device accessing the first hotspot is referred to as a second terminal device. After the hotspot jumps, a new hotspot provider in the second terminal device may be referred to as the target terminal device, and a hotspot enabled by the target terminal device is referred to as a second hotspot. A terminal device other than the target terminal device in the second terminal device may be referred to as the non-target terminal device. The first terminal device and the non-target terminal device may access the second hotspot. A quantity of second terminal devices is not limited in this embodiment.

As shown in FIG. 14, the Wi-Fi hotspot switching method provided in this embodiment may include the following steps.

S1401: The first terminal device obtains mobile channel quality information and sharing capability information of the first terminal device through detection.

S1402: The target terminal device obtains mobile channel quality information and sharing capability information of the target terminal device through detection.

S1403: The target terminal device sends the mobile channel quality information and the sharing capability information of the target terminal device to the first terminal device.

Correspondingly, the first terminal device receives the mobile channel quality information and the sharing capability information of the target terminal device.

S1404: The non-target terminal device obtains mobile channel quality information and sharing capability information of the non-target terminal device through detection.

S1405: The non-target terminal device sends the mobile channel quality information and the sharing capability information of the non-target terminal device to the first terminal device.

Correspondingly, the first terminal device receives the mobile channel quality information and the sharing capability information of the non-target terminal device.

An execution sequence of S1401, S1402 and S1403, and S1404 and S1405 is not limited in this embodiment.

Optionally, the target terminal device and the non-target terminal device may further send sharing requirement information to the first terminal device, so that the first terminal device considers a sharing requirement of the terminal device when subsequently determining whether the hotspot needs to jump and determining the target terminal device, to improve accuracy of determining whether the hotspot needs to jump, and improve accuracy of determining the target sharing device.

Optionally, the sharing requirement information includes, but is not limited to, at least one of the following: a minimum value of a sharing bandwidth, a minimum value of a sharing rate, a minimum value of a delay, or a minimum value of sharing duration.

Optionally, for each terminal device, an implementation of obtaining the mobile channel quality information through detection may include:
Step 11: Determine whether an available mobile channel is in an activated state.

If the available mobile channel is in an inactive state, step 12 is performed. If the available mobile channel is in the activated state, step 13 is performed. The activated state means that a communication connection is established between a terminal device and a network device.

Step 12: Activate the available mobile channel in an inactive state, and establish a communication connection to the network device. Then, step 13 is performed.

Step 13: For each available mobile channel, initiate a domain name system (domain name system, DNS) request on the mobile channel, and obtain a server address required in a detection process. The server address is not limited in this embodiment. For example, the server address is an address of a website server.

Step 14: Send an http get request on the mobile channel, where the request includes a request method, a uniform resource locator (uniform resource locator, URL) address, and an HTTP protocol version. Specific content included in the http get request is not limited in this embodiment.

Step 15: Receive, on the mobile channel, feedback information sent by a server.

Step 16: Obtain round trip-time (round-trip time, RTT) based on time at which the http get request is sent and time at which the feedback information is received, and obtain mobile channel quality information.

S1406: The first terminal device determines, based on the mobile channel quality information and/or the sharing capability information of the first terminal device and mobile channel quality information and/or sharing capability information of each second terminal device, whether the hotspot needs to jump.

If it is determined that the hotspot needs to jump, S1407 is performed. If it is determined that the hotspot does not need to jump, S1401 is performed again.

Optionally, in an implementation, whether the hotspot needs to jump is determined based on the mobile channel quality information of the first terminal device and the mobile channel quality information of each second terminal device. Usually, when mobile channel quality of the first terminal device is poor, and there is a second terminal device whose mobile channel quality is good, the hotspot may jump.

Optionally, whether the hotspot needs to jump may be determined based on whether a target parameter in the mobile channel quality information meets a corresponding preset condition. There may be one or more target parameters. Different target parameters correspond to different preset conditions. The preset conditions are not limited in this embodiment. When there are a plurality of target parameters, optionally, when all target parameters meet corresponding preset conditions, it is determined that the hotspot needs to jump. Optionally, each target parameter corresponds to a weight value, and whether the hotspot needs to jump is determined based on the weight value and all target parameters.

An example is used for description. It is assumed that the mobile channel quality information includes an air interface bandwidth W and an air interface delay T. For the first terminal device, a preset condition corresponding to an air interface bandwidth W1 is W1 < First threshold K1, and a preset condition corresponding to an air interface delay T1 is T1 > Second threshold K2. For the second terminal device, a preset condition corresponding to the air interface bandwidth W2 is W2 > Third threshold K3, and a preset condition corresponding to an air interface delay T2 is T2 < Fourth threshold K4.

Optionally, in an example, the target parameter is the air interface delay T. When T1 > K2, and T2 < K4 for the second terminal device exists, it is determined that the hotspot needs to jump.

Optionally, in another example, the target parameter includes the air interface bandwidth W and the air interface delay T. When W1 < K1, T1 > K2, and W2 > K3 and T2 < K4 for the second terminal device exist, it is determined that the hotspot needs to jump.

This implementation is applicable to a scenario in which a sharing capability of the terminal device is sufficient. When mobile communication quality of an original hotspot provider is poor, the hotspot may jump, to improve communication quality of the hotspot.

Optionally, in another implementation, whether the hotspot needs to jump is determined based on the sharing capability information of the first terminal device and the sharing capability information of each second terminal device. Usually, when the sharing capability of the first terminal device is insufficient, and there is a second terminal device with a sufficient sharing capability, the hotspot may jump. A determining principle is similar to a determining principle based on the mobile channel quality information, and a difference lies in that preset conditions corresponding to parameters in the sharing capability information are different.

This implementation is applicable to a scenario in which the terminal device is in a good communication environment. When a sharing capability of an original hotspot provider is insufficient, the hotspot may jump, to improve a sharing capability of the hotspot.

Optionally, in still another implementation, whether the hotspot needs to jump is determined based on the mobile channel quality information and the sharing capability information of the first terminal device and the mobile channel quality information and the sharing capability information of each second terminal device. In this implementation, mobile channel quality and a sharing capability are comprehensively considered, and determining is more accurate.

S1407: The first terminal device determines the target terminal device based on the mobile channel quality information and the sharing capability information of each second terminal device.

Specifically, priorities of all available mobile channels may be sorted based on the mobile channel quality information and the sharing capability information of each second terminal device, and the target terminal device is determined in the second terminal device. Usually, a mobile channel with a higher air interface bandwidth, a smaller air interface delay, a higher air interface rate, a lower packet loss rate, and a stronger sharing capability has a higher priority.

When the priorities of all the available mobile channels are sorted, the priorities may be sorted based on the target parameters in the mobile channel quality information and the sharing capability information. There may be one or more target parameters. This is not limited in this embodiment.

S1408: The first terminal device sends first jump information to the target terminal device. The first jump information is used to indicate the target terminal device to enable the second hotspot.

Correspondingly, the target terminal device receives the first jump information.

S1409: The target terminal device stops connecting to the first hotspot, and enables the second hotspot.

S1410: The first terminal device disables the first hotspot and is connected to the second hotspot.

S1411: The non-target terminal device stops connecting to the first hotspot and is connected to the second hotspot.

Optionally, in an implementation, after the first terminal device disables the first hotspot, a connection between the non-target terminal device and the first hotspot is interrupted, and searching for a Wi-Fi signal is triggered. After the target terminal device enables the second hotspot, the non-target terminal device finds a signal of the second hotspot, and is connected to the second hotspot.

S1408 to S1411 may be defined as a hotspot jumping phase, and an execution sequence of S1409 to S1411 is not limited in this embodiment.

It can be learned that according to the Wi-Fi hotspot switching method provided in this embodiment of this application, a hotspot provider may jump, and a current hotspot provider determines, based on mobile communication quality and a sharing capability of each terminal device in a wireless local area network, whether a hotspot needs to be changed. In a plurality of terminal devices in the wireless local area network, if there is a more appropriate terminal device that can provide a hotspot, the hotspot automatically jumps. The current hotspot provider disables the hotspot, and a new hotspot provider automatically enables a hotspot, to improve networking flexibility of the wireless local area network. By automatically jumping the hotspot, a communication capability of a new hotspot is improved, communication quality of a terminal device connected to the new hotspot is improved, and communication quality of the entire wireless local area network is improved.

Optionally, before S1401, the Wi-Fi hotspot switching method provided in this embodiment may further include:
S1412: The first terminal device sets a hotspot-related parameter.
S1413: The target terminal device sets a hotspot-related parameter.
S1414: The non-target terminal device sets a hotspot-related parameter.

An execution sequence of S1412 to S 1414 is not limited in this embodiment.

Optionally, the hotspot-related parameter may include a permission parameter and/or a hotspot parameter.

Optionally, the user may set the hotspot-related parameter. Correspondingly, the terminal device sets the hotspot-related parameter in response to the operation of the user. For example, the user sets a "support hotspot jumping" switch and a "support trusted hotspot jumping" switch in the interface shown in FIG. 9(a) to FIG. 9(d) or FIG. 10.

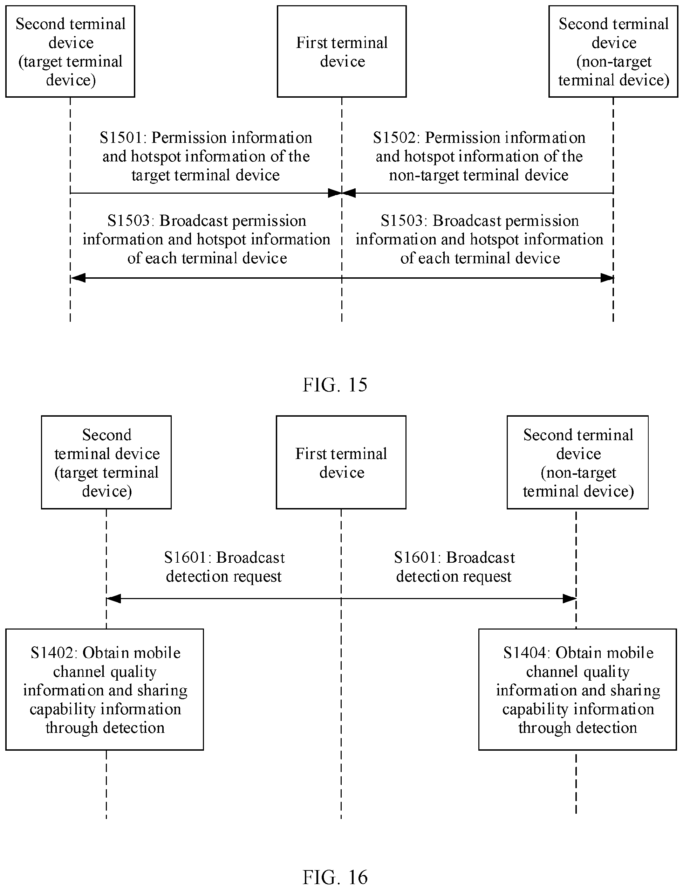

Optionally, based on the embodiment shown in FIG. 14, FIG. 15 is a diagram of another message exchange of a Wi-Fi hotspot switching method according to an embodiment of this application. This embodiment relates to an interaction process of hotspot-related information of a terminal device in a wireless local area network. As shown in FIG. 15, before S1409, the Wi-Fi hotspot switching method provided in this embodiment may further include the following steps.

S1501: A target terminal device sends permission information and hotspot information of the target terminal device to a first terminal device.

The permission information of the target terminal device is used to indicate whether a hotspot is allowed to jump from the target terminal device to another terminal device and whether a hotspot is allowed to jump from another terminal device to the target terminal device.

Correspondingly, the first terminal device receives the permission information and the hotspot information of the target terminal device.

S1502: A non-target terminal device sends permission information and hotspot information of the non-target terminal device to the first terminal device.

The permission information of the non-target terminal device is used to indicate whether a hotspot is allowed to jump from the non-target terminal device to another terminal device and whether a hotspot is allowed to jump from another terminal device to the non-target terminal device.

Correspondingly, the first terminal device receives the permission information and the hotspot information of the non-target terminal device.

An execution sequence of S1501 and S1502 is not limited in this embodiment.

S1503: The first terminal device broadcasts permission information and hotspot information of each terminal device to each second terminal device.

Terminal devices include the first terminal device and the second terminal device.

Correspondingly, the second terminal device receives the permission information and the hotspot information of each terminal device.

It can be learned that the second terminal device sends the permission information and the hotspot information to the first terminal device, and the first terminal device broadcasts the permission information and the hotspot information of each terminal device in the wireless local area network, so that the terminal devices can share respective hotspot-related information, to facilitate processing of a subsequent procedure. For example, after the hotspot jumps for a plurality of times, a current hotspot provider may determine, based on hotspot-related information of each terminal device, whether the hotspot needs to jump, to improve information exchange efficiency and procedure processing efficiency.

It should be noted that execution time of S1501 to S1503 is not limited in this embodiment. Optionally, these steps may be performed before S1401. After connecting to a first Wi-Fi hotspot provided by the first terminal device, the second terminal device may share the permission information and the hotspot information of each terminal device as early as possible, to facilitate subsequent steps.

Based on the embodiment shown in FIG. 14, another embodiment of this application describes implementations of S1401 to S1405.

Optionally, in an implementation, the first terminal device triggers each second terminal device to obtain the mobile channel quality information and the sharing capability information through detection, and feed back the mobile channel quality information and the sharing capability information to the first terminal device. FIG. 16 is a diagram of still another message exchange of a Wi-Fi hotspot switching method according to an embodiment of this application. As shown in FIG. 16, before S1402 and S1404, the method may further include:
S1601: A first terminal device broadcasts a probe request to each second terminal device.

The probe request is used to indicate a second terminal device to feed back mobile channel quality information and sharing capability information.

Correspondingly, the second terminal device receives the probe request. Subsequently, a target terminal device performs S1402 and S1403, and a non-target terminal device performs S1404 and S1405.

It can be learned that because the first terminal device is currently a hotspot provider, and the first terminal device triggers each second terminal device to feed back the mobile channel quality information and the sharing capability information, a detection frequency of the second terminal device can be effectively controlled.

It should be noted that an execution sequence of S1601 and S1401 is not limited in this embodiment.

Optionally, in an implementation of S1601, S1601 is performed after S1401. If the first terminal device determines that the mobile channel quality information of the first terminal device and/or the sharing capability information of the first terminal device meet/meets a preset condition, the first terminal device broadcasts the probe request.

Usually, when the mobile channel quality of the first terminal device is poor, and/or when the sharing capability of the first terminal device is insufficient, the second terminal device may be triggered to feed back the information. Optionally, whether to broadcast the probe request may be determined based on whether a target parameter in the mobile channel quality information and/or the sharing capability information of the first terminal device meet/meets a corresponding preset condition. For a determining principle, refer to related descriptions in S1406. Atechnical principle is similar, and details are not described herein again.

It can be learned that the first terminal device triggers, by using an event, to broadcast the probe request, to indicate the second terminal device to feed back the information. This further avoids invalid detection of the second terminal device.

Optionally, in another implementation of S1601, the first terminal device may periodically broadcast the probe request.

A value of a broadcast period is not limited in this embodiment. Optionally, the first terminal device may adjust the broadcast period in real time.

Optionally, in another implementation, the second terminal device may autonomously trigger detection to obtain the mobile channel quality information and the sharing capability information, and feed back the mobile channel quality information and the sharing capability information to the first terminal device. Optionally, the second terminal device may periodically and actively obtain the mobile channel quality information and the sharing capability information through detection. A value of a detection period is not limited in this embodiment. Optionally, the second terminal device may trigger active detection to obtain the mobile channel quality information and the sharing capability information, for example, in a scenario in which a data volume of an APP on the second terminal device increases, or a required delay is reduced.

Based on the embodiment shown in FIG. 14, another embodiment of this application describes an implementation of a hotspot jumping phase.

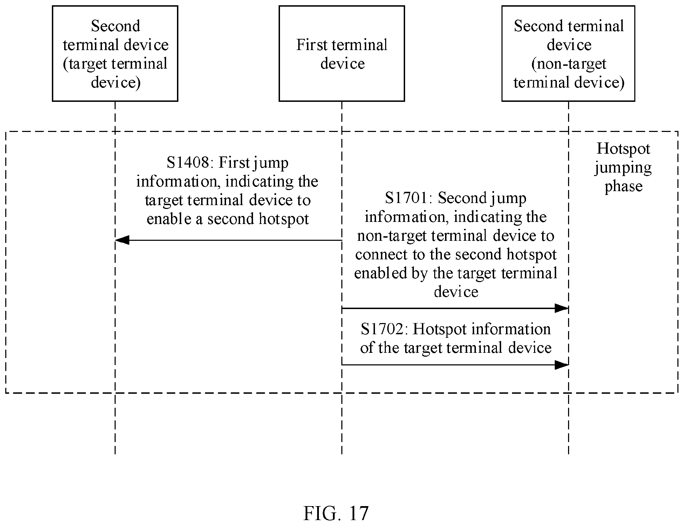

Optionally, in an implementation, the first terminal device may indicate the non-target terminal device to perform hotspot jumping. FIG. 17 is a diagram of yet another message exchange of a Wi-Fi hotspot switching method according to an embodiment of this application. As shown in FIG. 17, after S1408, the method may further include:
S1701: The first terminal device sends second jump information to the non-target terminal device. The second jump information is used to indicate the non-target terminal device to connect to the second hotspot enabled by the target terminal device.

Correspondingly, the non-target terminal device receives the second jump information.

The first terminal device sends the second jump information to the non-target terminal device, so that the non-target terminal device clearly learns a hotspot to which a connection needs to be changed, to shorten time for connecting to a new hotspot in a hotspot change process.

Optionally, the method may further include the following steps.

S1702: The first terminal device sends hotspot information of the target terminal device to the non-target terminal device.

The first terminal device sends the hotspot information of the target terminal device to the non-target terminal device, so that the non-target terminal device learns hotspot information of a new hotspot in advance, to shorten time for connecting to the new hotspot in a hotspot change process.

Optionally, S1701 and S1702 may be implemented by using one message. To be specific, the first terminal device sends the second jump information and the hotspot information of the target terminal device to the non-target terminal device in one message, to reduce a signaling interaction procedure.

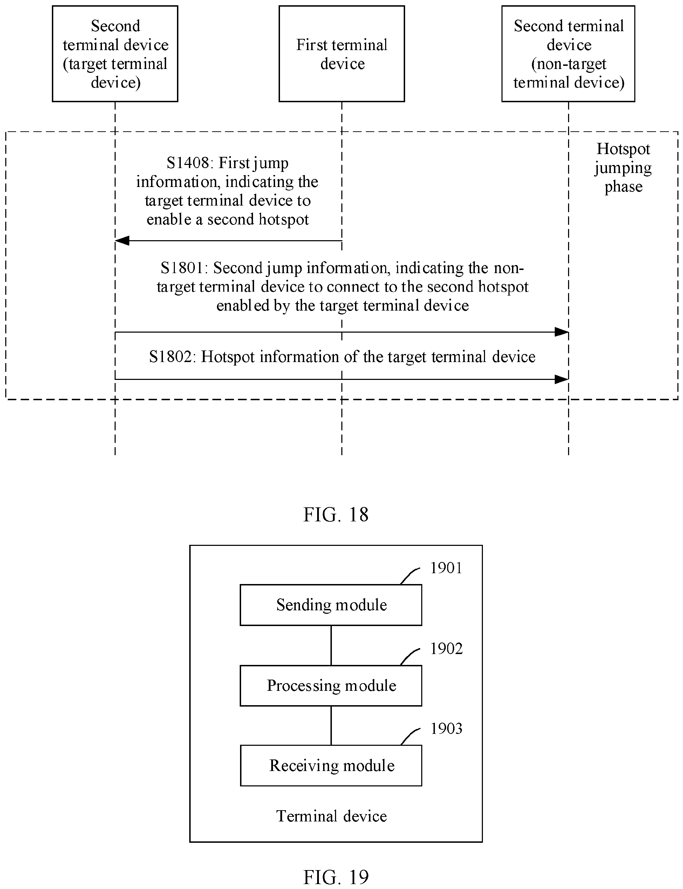

Optionally, in another implementation, the target terminal device may indicate the non-target terminal device to perform hotspot jumping. FIG. 18 is a diagram of still yet another message exchange of a Wi-Fi hotspot switching method according to an embodiment of this application. As shown in FIG. 18, after S 1408, the method may further include:
S1801: The target terminal device sends second jump information to the non-target terminal device.

Optionally, the method may further include the following steps.

S1802: The target terminal device sends hotspot information of the target terminal device to the non-target terminal device.

For S1801, refer to S1701. For S1802, refer to S1702. Technical principles and technical effects are similar, and details are not described herein again.

It may be understood that, to implement the foregoing functions, the terminal device includes corresponding hardware and/or software modules for performing the functions. In combination with example algorithm steps described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application with reference to embodiments, but it should not be considered that the implementation goes beyond the scope of this application.

In embodiments of this application, the terminal device may be divided into function modules based on the foregoing method examples, for example, each function module may be obtained through division based on each corresponding function, or two or more functions may be integrated into one processing module. It should be noted that, in embodiments of this application, module division is an example, and is merely logical function division. In an actual implementation, there may be another division manner. It should be noted that a name of a module in this embodiment of this application is an example, and the name of the module is not limited in actual implementation.

For example, FIG. 19 is a schematic diagram of a structure of a terminal device according to an embodiment of this application. The terminal device is applicable to the first terminal device, the target terminal device, and the non-target terminal device in embodiments of this application. As shown in FIG. 19, the terminal device may include a sending module 1901, a receiving module 1903, and a processing module 1902.

When the terminal device is the first terminal device, a first Wi-Fi hotspot is currently enabled, and at least one second terminal device is connected to the first Wi-Fi hotspot. The first terminal device may include:

The processing module 1902 is configured to: obtain mobile channel quality information and sharing capability information of a first terminal device through detection, and obtain mobile channel quality information and sharing capability information of each second terminal device; and if it is determined, based on the mobile channel quality information and/or the sharing capability information of the first terminal device and the mobile channel quality information and/or the sharing capability information of each second terminal device, that a Wi-Fi hotspot jumps to a target terminal device in the at least one second terminal device, control the sending module 1901 to send first jump information to the target terminal device, where the first jump information is used to indicate the target terminal device to enable a second Wi-Fi hotspot.

The processing module 1902 is further configured to disable the first Wi-Fi hotspot and connect to the second Wi-Fi hotspot.

Optionally, the sending module 1901 is further configured to broadcast a probe request to the second terminal device.

The receiving module 1903 is specifically configured to receive the mobile channel quality information and the sharing capability information of the second terminal device that are sent by the second terminal device.

Optionally, the sending module 1901 is specifically configured to periodically broadcast the probe request.

Optionally, the sending module 1901 is specifically configured to broadcast the probe request if the processing module 1902 determines that the mobile channel quality information of the first terminal device and/or the sharing capability information of the first terminal device meet/meets a preset condition.

Optionally, the receiving module 1903 is further configured to: before the processing module 1902 disables the first Wi-Fi hotspot, receive permission information and hotspot information of the second terminal device that are sent by the second terminal device, where the permission information of the second terminal device is used to indicate whether a Wi-Fi hotspot is allowed to jump from the second terminal device to another terminal device and whether a Wi-Fi hotspot is allowed to jump from another terminal device to the second terminal device.

Optionally, the sending module 1901 is further configured to broadcast permission information and hotspot information of each terminal device to the second terminal device.

Optionally, the processing module 1902 is specifically configured to:
determine, based on the permission information of each second terminal device, the mobile channel quality information and/or the sharing capability information of the first terminal device, and the mobile channel quality information and/or the sharing capability information of each second terminal device, that the Wi-Fi hotspot jumps to the target terminal device in the at least one second terminal device.

Optionally, the sending module 1901 is further configured to: after sending the first jump information to the target terminal device, send second jump information to a non-target terminal device, where the non-target terminal device is a second terminal device other than the target terminal device in the at least one second terminal device, and the second jump information is used to indicate the non-target terminal device to connect to the second Wi-Fi hotspot enabled by the target terminal device.

Optionally, the sending module 1901 is further configured to send the hotspot information of the target terminal device to the non-target terminal device.

Optionally, the second jump information and the hotspot information of the target terminal device are located in one message.

Optionally, the processing module 1902 is further configured to:
disable display of a first icon on a screen of the first terminal device, and display a second icon, where the first icon is used to indicate the first terminal device to enable a Wi-Fi hotspot, and the second icon is used to indicate that the first terminal device enables a WLAN function and is connected to the Wi-Fi hotspot.

Optionally, the processing module 1902 is further configured to:
display prompt information, where the prompt information is used to indicate that the first Wi-Fi hotspot is disabled and the second Wi-Fi hotspot is connected.

Optionally, the processing module 1902 is further configured to display a target interface before obtaining the mobile channel quality information and the sharing capability information of the first terminal device through detection, where the target interface includes a first control and a second control, the first control is used to set whether a Wi-Fi hotspot is allowed to jump from the first terminal device to another terminal device, and the second control is used to set whether a Wi-Fi hotspot is allowed to jump from another terminal device to the first terminal device;
receive operations performed by a user on the first control and the second control; and
generate permission information of the first terminal device in response to the operations.

When the terminal device is the target terminal device, the terminal device currently accesses the first Wi-Fi hotspot enabled by the first terminal device. The target terminal device may include:

The processing module 1902 is configured to obtain mobile channel quality information and sharing capability information of the target terminal device through detection.

The sending module 1901 is configured to send the mobile channel quality information and the sharing capability information to the first terminal device.

The receiving module 1903 is configured to receive first jump information sent by the first terminal device, where the first jump information is used to indicate the target terminal device to enable a second Wi-Fi hotspot.

The processing module 1902 is further configured to stop connecting to the first Wi-Fi hotspot, and enable the second Wi-Fi hotspot.

Optionally, the receiving module 1903 is further configured to: before the processing module 1902 obtains mobile channel quality information and sharing capability information of the target terminal device through detection, receive a probe request broadcast by the first terminal device.

Optionally, the sending module 1901 is further configured to: before the receiving module 1903 receives first jump information sent by the first terminal device, send permission information and hotspot information of the target terminal device to the first terminal device, where the permission information of the target terminal device is used to indicate whether a Wi-Fi hotspot is allowed to jump from the target terminal device to another terminal device and whether a Wi-Fi hotspot is allowed to jump from another terminal device to the target terminal device.

Optionally, the receiving module 1903 is further configured to receive permission information and hotspot information of each terminal device that are broadcast by the first terminal device.

Optionally, the sending module 1901 is further configured to: after the receiving module 1903 receives first jump information sent by the first terminal device, send second jump information to the non-target terminal device, where the second jump information is used to indicate the non-target terminal device to connect to the second Wi-Fi hotspot enabled by the target terminal device.

Optionally, the sending module 1901 is further configured to send the hotspot information of the target terminal device to the non-target terminal device.

Optionally, the processing module 1902 is further configured to:
disable display of a first icon on a screen of the target terminal device, and display a second icon, where the first icon is used to indicate that the target terminal device enables a WLAN function and is connected to a Wi-Fi hotspot, and the second icon is used to indicate the target terminal device to enable the Wi-Fi hotspot.

Optionally, the processing module 1902 is further configured to:
display prompt information, where the prompt information is used to indicate that the target terminal device has enabled the second Wi-Fi hotspot.

Optionally, the processing module 1902 is further configured to:
display a target interface before obtaining the mobile channel quality information and the sharing capability information of the target terminal device through detection, where the target interface includes a first control and a second control, the first control is used to set whether a Wi-Fi hotspot is allowed to jump from the target terminal device to another terminal device, and the second control is used to set whether a Wi-Fi hotspot is allowed to jump from another terminal device to the target terminal device;
receive operations performed by a user on the first control and the second control; and
generate the permission information of the target terminal device in response to the operations.

When the terminal device is the non-target terminal device, the terminal device currently accesses the first Wi-Fi hotspot enabled by the first terminal device. The non-target terminal device may include:

The processing module 1902 is configured to obtain mobile channel quality information and sharing capability information of the non-target terminal device through detection.

The sending module 1901 is configured to send the mobile channel quality information and the sharing capability information to the first terminal device.

The processing module 1902 is further configured to: stop connecting to the first Wi-Fi hotspot, and connect to the second Wi-Fi hotspot enabled by the target terminal device.

Optionally, the receiving module 1903 is configured to: before the processing module 1902 and obtains the mobile channel quality information and the sharing capability information of the non-target terminal device through detection, receive a probe request broadcast by the first terminal device.

Optionally, the sending module 1901 is further configured to: before the processing module 1902 stops connecting to the first Wi-Fi hotspot, send permission information and hotspot information of the non-target terminal device to the first terminal device, where the permission information of the non-target terminal device is used to indicate whether a Wi-Fi hotspot is allowed to jump from the non-target terminal device to another terminal device and whether a Wi-Fi hotspot is allowed to jump from another terminal device to the non-target terminal device.

Optionally, the receiving module 1903 is further configured to receive permission information and hotspot information of each terminal device that are broadcast by the first terminal device.

Optionally, the receiving module 1903 is further configured to: before the processing module 1902 stops connecting to the first Wi-Fi hotspot, receive jump information sent by the first terminal device or the target terminal device, where the jump information is used to indicate the non-target terminal device to connect to the second Wi-Fi hotspot enabled by the target terminal device.

Optionally, the processing module 1902 is further configured to:
display prompt information, where the prompt information is used to indicate that the non-target terminal device has connected to the second Wi-Fi hotspot.

Optionally, the processing module 1902 is further configured to:
display a target interface before obtaining the mobile channel quality information and the sharing capability information of the target terminal device, where the target interface includes a first control and a second control, the first control is used to set whether a Wi-Fi hotspot is allowed to jump from the non-target terminal device to another terminal device, and the second control is used to set whether a Wi-Fi hotspot is allowed to jump from the another terminal device to the non-target terminal device;
receive operations performed by a user on the first control and the second control; and
generate the permission information of the non-target terminal device in response to the operations.

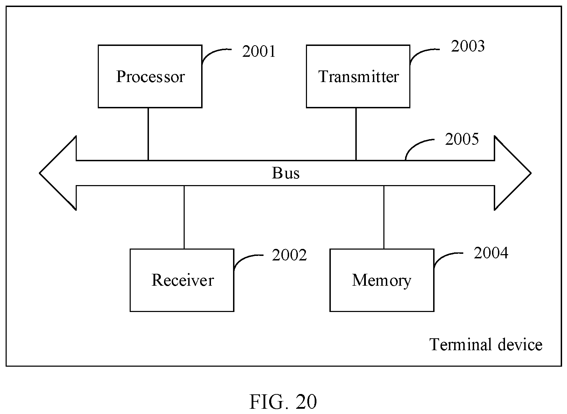

FIG. 20 shows another structure of a terminal device according to an embodiment of this application. The terminal device may be the first terminal device, the target terminal device, or the non-target terminal device in embodiments of this application. The terminal device includes a processor 2001, a receiver 2002, a transmitter 2003, a memory 2004, and a bus 2005. The processor 2001 includes one or more processing cores. The processor 2001 runs a software program and a module, to execute various functional applications and perform information processing. The receiver 2002 and the transmitter 2003 may be implemented as a communication component, and the communication component may be a baseband chip. The memory 2004 is connected to the processor 2001 through a bus 2005. The memory 2004 may be configured to store at least one program instruction, and the processor 2001 is configured to execute the at least one program instruction, to implement the technical solutions in the foregoing embodiments. Implementation principles and technical effects thereof are similar to those of the foregoing method embodiments. Details are not described herein again.

After the terminal is powered on, the processor can read a software program in the memory, interpret and execute instructions of the software program, and process data of the software program. When the processor needs to send data through an antenna, after performing baseband processing on to-be-sent data, the processor outputs a baseband signal to a control circuit in the control circuit. The control circuit performs radio frequency processing on the baseband signal and then sends a radio frequency signal to the outside in a form of an electromagnetic wave through the antenna. When data is sent to the terminal, the control circuit receives a radio frequency signal through the antenna, converts the radio frequency signal into the baseband signal, and outputs the baseband signal to the processor. The processor converts the baseband signal into data and processes the data.

A person skilled in the art may understand that for ease of description, FIG. 20 shows only one memory and only one processor. In a real terminal, there may be a plurality of processors and memories. The memory may also be referred to as a storage medium, a storage device, or the like. This is not limited in embodiments of this application.

In an optional implementation, the processor may include a baseband processor and a central processing unit. The baseband processor is mainly configured to process communication data, and the central processing unit is mainly configured to execute a software program and process data of the software program. A person skilled in the art may understand that the baseband processor and the central processing unit may be integrated into one processor, or may be independent processors, and are connected through a bus or the like. A person skilled in the art may understand that the terminal may include a plurality of baseband processors to adapt to different network standards, and the terminal may include a plurality of central processing units to enhance a processing capability of the terminal. All the components of the terminal may be connected through various buses. The baseband processor may alternatively be expressed as a baseband processing circuit or a baseband processing chip. The central processing unit may alternatively be expressed as a central processing circuit or a central processing chip. The function of processing the communication protocol and the communication data may be built in the processor, or may be stored in the memory in a form of a software program, and the processor executes the software program to implement a baseband processing function. The memory may be integrated into the processor, or may be independent of the processor. The memory includes a cache Cache, and may store frequently accessed data/instructions.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in embodiments of this application. The general-purpose processor may be a microprocessor, or may be any conventional processor or the like. The steps of the method disclosed with reference to embodiments of this application may be directly performed by a hardware processor, or may be performed by using a combination of hardware in the processor and a software module.

In this embodiment of this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). The memory is any other medium that can be configured to carry or store expected program code in a form of an instruction structure or a data structure and that can be accessed by a computer, but is not limited thereto.

The memory in embodiments of this application may alternatively be a circuit or any other apparatus capable of implementing a storage function, and is configured to store program instructions and/or data. All or a part of the method provided in embodiments of this application may be implemented by using software, hardware, firmware, or any combination thereof. When the software is used to implement embodiments, all or a part of embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device such as a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium (for example, an SSD), or the like.

An embodiment of this application provides a computer program product. When the computer program product runs on a terminal, the terminal is enabled to perform the technical solutions in the foregoing embodiments. Implementation principles and technical effects thereof are similar to those of the foregoing related embodiments, and details are not described herein again.

An embodiment of this application provides a computer-readable storage medium, where the computer-readable storage medium stores program instructions. When the program instructions are executed by a terminal, the terminal is enabled to perform the technical solutions in the foregoing embodiments. Implementation principles and technical effects thereof are similar to those of the foregoing related embodiments, and details are not described herein again. In conclusion, the foregoing embodiments are merely intended for describing the technical solutions of this application instead of limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A Wi-Fi hotspot switching method, applied to a communication system, wherein the communication system comprises a first terminal device and at least one second terminal device, the first terminal device enables a first wireless fidelity Wi-Fi hotspot, the second terminal device is connected to the first Wi-Fi hotspot, and the method comprises:
obtaining, by the first terminal device through detection, mobile channel quality information and sharing capability information of the first terminal device;
obtaining, by the second terminal device through detection, mobile channel quality information and sharing capability information of the second terminal device, and sending the mobile channel quality information and the sharing capability information of the second terminal device to the first terminal device;
if the first terminal device determines, based on the mobile channel quality information and/or the sharing capability information of the first terminal device and the mobile channel quality information and/or the sharing capability information of each second terminal device, that a Wi-Fi hotspot jumps to a target terminal device in the at least one second terminal device, sending first jump information to the target terminal device, wherein the first jump information is used to indicate the target terminal device to enable a second Wi-Fi hotspot;
stopping, by the target terminal device, connecting to the first Wi-Fi hotspot, and enabling the second Wi-Fi hotspot;
disabling, by the first terminal device, the first Wi-Fi hotspot, and connecting to the second Wi-Fi hotspot; and
stopping, by a non-target terminal device, connecting to the first Wi-Fi hotspot, and connecting to the second Wi-Fi hotspot, wherein the non-target terminal device is a second terminal device other than the target terminal device in the at least one second terminal device.

2. The method according to claim 1, further comprising:
disabling, by the first terminal device, display of a first icon, and displaying a second icon, wherein the first icon is used to indicate the first terminal device to enable a Wi-Fi hotspot, and the second icon is used to indicate that the first terminal device enables a wireless local area network WLAN function and is connected to the Wi-Fi hotspot.

3. The method according to claim 1, further comprising:
disabling, by the target terminal device, display of a second icon, and displaying a first icon, wherein the first icon is used to indicate the target terminal device to enable a Wi-Fi hotspot, and the second icon is used to indicate that the target terminal device enables a WLAN function and is connected to the Wi-Fi hotspot.

4. The method according to any one of claims 1 to 3, wherein after the sending first jump information to the target terminal device, the method further comprises:
sending, by the first terminal device or the target terminal device, second jump information to the non-target terminal device, wherein the second jump information is used to indicate the non-target terminal device to connect to the second Wi-Fi hotspot.

5. A Wi-Fi hotspot switching method, applied to a first terminal device, wherein the first terminal device enables a first wireless fidelity Wi-Fi hotspot, at least one second terminal device is connected to the first Wi-Fi hotspot, and the method comprises:
obtaining mobile channel quality information and sharing capability information of the first terminal device through detection, and obtaining mobile channel quality information and sharing capability information of each second terminal device;
if it is determined, based on the mobile channel quality information and/or the sharing capability information of the first terminal device and the mobile channel quality information and/or the sharing capability information of each second terminal device, that a Wi-Fi hotspot jumps to a target terminal device in the at least one second terminal device, sending first jump information to the target terminal device, wherein the first jump information is used to indicate the target terminal device to enable a second Wi-Fi hotspot;
disabling the first Wi-Fi hotspot; and
connecting to the second Wi-Fi hotspot.

6. The method according to claim 5, wherein the obtaining mobile channel quality information and sharing capability information of the second terminal device comprises:
broadcasting a probe request to the second terminal device; and
receiving the mobile channel quality information and the sharing capability information of the second terminal device that are sent by the second terminal device.

7. The method according to claim 6, wherein the broadcasting a probe request comprises:
periodically broadcasting the probe request.

8. The method according to claim 6, wherein the broadcasting a probe request comprises:
broadcasting the probe request if it is determined that the mobile channel quality information of the first terminal device and/or the sharing capability information of the first terminal device meet/meets a preset condition.

9. The method according to any one of claims 5 to 8, wherein before the disabling the first Wi-Fi hotspot, the method further comprises:
receiving permission information and hotspot information of the second terminal device that are sent by the second terminal device, wherein the permission information of the second terminal device is used to indicate whether a Wi-Fi hotspot is allowed to jump from the second terminal device to another terminal device and whether a Wi-Fi hotspot is allowed to jump from another terminal device to the second terminal device.

10. The method according to claim 9, further comprising:
broadcasting permission information and hotspot information of each terminal device to the second terminal device.

11. The method according to claim 9, wherein the determining, based on the mobile channel quality information and/or the sharing capability information of the first terminal device and the mobile channel quality information and/or the sharing capability information of each second terminal device, that a Wi-Fi hotspot jumps to a target terminal device in the at least one second terminal device comprises:
determining, based on the permission information of each second terminal device, the mobile channel quality information and/or the sharing capability information of the first terminal device, and the mobile channel quality information and/or the sharing capability information of each second terminal device, that the Wi-Fi hotspot jumps to the target terminal device in the at least one second terminal device.

12. The method according to any one of claims 5 to 11, wherein after the sending first jump information to the target terminal device, the method further comprises:
sending second jump information to a non-target terminal device, wherein the non-target terminal device is a second terminal device other than the target terminal device in the at least one second terminal device, and the second jump information is used to indicate the non-target terminal device to connect to the second Wi-Fi hotspot enabled by the target terminal device.

13. The method according to claim 12, further comprising:
sending hotspot information of the target terminal device to the non-target terminal device.

14. The method according to any one of claims 5 to 13, wherein the method further comprises:
disabling display of a first icon on a screen of the first terminal device, and displaying a second icon, wherein the first icon is used to indicate the first terminal device to enable a Wi-Fi hotspot, and the second icon is used to indicate that the first terminal device enables a wireless local area network WLAN function and is connected to the Wi-Fi hotspot.

15. The method according to any one of claims 5 to 13, wherein the method further comprises:
displaying prompt information, wherein the prompt information is used to indicate that the first Wi-Fi hotspot is disabled and the second Wi-Fi hotspot is connected.

16. The method according to any one of claims 5 to 13, wherein before the obtaining mobile channel quality information and sharing capability information of the first terminal device through detection, the method further comprises:
displaying a target interface, wherein the target interface comprises a first control and a second control, the first control is used to set whether a Wi-Fi hotspot is allowed to jump from the first terminal device to another terminal device, and the second control is used to set whether a Wi-Fi hotspot is allowed to jump from another terminal device to the first terminal device;
receiving operations performed by a user on the first control and the second control; and
generating permission information of the first terminal device in response to the operations.

17. A Wi-Fi hotspot switching method, applied to a target terminal device, wherein a first terminal device enables a first wireless fidelity Wi-Fi hotspot, both the target terminal device and a non-target terminal device are connected to the first Wi-Fi hotspot, and the method comprises:
obtaining mobile channel quality information and sharing capability information of the target terminal device through detection;
sending the mobile channel quality information and the sharing capability information to the first terminal device;
receiving first jump information sent by the first terminal device, wherein the first jump information is used to indicate the target terminal device to enable a second Wi-Fi hotspot;
stopping connecting to the first Wi-Fi hotspot; and
enabling the second Wi-Fi hotspot.

18. The method according to claim 17, wherein before the obtaining mobile channel quality information and sharing capability information of the target terminal device through detection, the method further comprises:
receiving a probe request broadcast by the first terminal device.

19. The method according to claim 17, wherein before the receiving first jump information sent by the first terminal device, the method further comprises:
sending permission information and hotspot information of the target terminal device to the first terminal device, wherein the permission information of the target terminal device is used to indicate whether a Wi-Fi hotspot is allowed to jump from the target terminal device to another terminal device and whether a Wi-Fi hotspot is allowed to jump from another terminal device to the target terminal device.

20. The method according to claim 19, further comprising:
receiving permission information and hotspot information of each terminal device that are broadcast by the first terminal device.

21. The method according to any one of claims 17 to 20, wherein after the receiving first jump information sent by the first terminal device, the method further comprises:
sending second jump information to the non-target terminal device, wherein the second jump information is used to indicate the non-target terminal device to connect to the second Wi-Fi hotspot enabled by the target terminal device.

22. The method according to claim 21, further comprising:
sending the hotspot information of the target terminal device to the non-target terminal device.

23. The method according to any one of claims 17 to 22, wherein the method further comprises:
disabling display of a first icon on a screen of the target terminal device, and displaying a second icon, wherein the first icon is used to indicate that the target terminal device enables a wireless local area network WLAN function and is connected to a Wi-Fi hotspot, and the second icon is used to indicate that the target terminal device enables the Wi-Fi hotspot.

24. The method according to any one of claims 17 to 22, wherein the method further comprises:
displaying prompt information, wherein the prompt information is used to indicate that the target terminal device has enabled the second Wi-Fi hotspot.

25. The method according to any one of claims 17 to 22, wherein before the obtaining mobile channel quality information and sharing capability information of the target terminal device through detection, the method further comprises:
displaying a target interface, wherein the target interface comprises a first control and a second control, the first control is used to set whether a Wi-Fi hotspot is allowed to jump from the target terminal device to another terminal device, and the second control is used to set whether a Wi-Fi hotspot is allowed to jump from another terminal device to the target terminal device;
receiving operations performed by a user on the first control and the second control; and
generating the permission information of the target terminal device in response to the operations.

26. A Wi-Fi hotspot switching method, applied to a non-target terminal device, wherein a first terminal device enables a first wireless fidelity Wi-Fi hotspot, both the non-target terminal device and a target terminal device are connected to the first Wi-Fi hotspot, and the method comprises:
obtaining mobile channel quality information and sharing capability information of the non-target terminal device through detection;
sending the mobile channel quality information and the sharing capability information to the first terminal device;
stopping connecting to the first Wi-Fi hotspot; and
connecting to a second Wi-Fi hotspot enabled by the target terminal device.

27. The method according to claim 26, wherein before the obtaining mobile channel quality information and sharing capability information of the non-target terminal device through detection, the method further comprises:
receiving a probe request broadcast by the first terminal device.

28. The method according to claim 26, wherein before the stopping connecting to the first Wi-Fi hotspot, the method further comprises:
sending permission information and hotspot information of the non-target terminal device to the first terminal device, wherein the permission information of the non-target terminal device is used to indicate whether a Wi-Fi hotspot is allowed to jump from the non-target terminal device to another terminal device and whether a Wi-Fi hotspot is allowed to jump from another terminal device to the non-target terminal device.

29. The method according to claim 28, further comprising:
receiving permission information and hotspot information of each terminal device that are broadcast by the first terminal device.

30. The method according to any one of claims 26 to 29, wherein before the stopping connecting to the first Wi-Fi hotspot, the method further comprises:
receiving jump information sent by the first terminal device or the target terminal device, wherein the jump information is used to indicate the non-target terminal device to connect to the second Wi-Fi hotspot enabled by the target terminal device.

31. The method according to any one of claims 26 to 29, wherein the method further comprises:
displaying prompt information, wherein the prompt information is used to indicate that the non-target terminal device has connected to the second Wi-Fi hotspot.

32. The method according to any one of claims 26 to 29, wherein before the obtaining mobile channel quality information and sharing capability information of the target terminal device, the method further comprises:
displaying a target interface, wherein the target interface comprises a first control and a second control, the first control is used to set whether a Wi-Fi hotspot is allowed to jump from the non-target terminal device to another terminal device, and the second control is used to set whether a Wi-Fi hotspot is allowed to jump from the another terminal device to the non-target terminal device;
receiving operations performed by a user on the first control and the second control; and
generating the permission information of the non-target terminal device in response to the operations.

33. A terminal device, wherein the terminal device comprises a processor, and the processor is configured to: be coupled to a memory, read instructions in the memory, and enable, according to the instructions, the terminal device to perform the method according to any one of claims 5 to 16, or perform the method according to any one of claims 17 to 25, or perform the method according to any one of claims 26 to 32.

34. A computer-readable storage medium, wherein the computer-readable storage medium stores computer instructions, and when the computer instructions are run on an electronic device, the electronic device is enabled to perform the method according to any one of claims 5 to 16, or perform the method according to any one of claims 17 to 25, or perform the method according to any one of claims 26 to 32.

35. A computer program product comprising instructions, wherein when the computer program product runs on a terminal, the terminal is enabled to perform the method according to any one of claims 5 to 16, or perform the method according to any one of claims 17 to 25, or perform the method according to any one of claims 26 to 32.
